# FASCICULE DE BREVET EUROPEEN

(11) **EP 1 474 430 B1**
(45) Date de publication et mention de la délivrance du brevet: **25.01.2006**
(21) Numéro de dépôt: 03718877.8
(22) Date de dépôt: 14.02.2003
(51) Int. Cl.: C07F 17/02, C07F 17/00, C07K 2/00, C07H 23/00, C12Q 1/68, G01N 33/52

(54) **METALLOCENES BIFONCTIONNALISES, UTILISATION POUR LE MARQUAGE DE MOLECULES BIOLOGIQUES**
BIFUNKTIONELLE METALLOCENE, VERWENDUNG ZUR MARKIERUNG VON BIOMOLEKÜLEN
BI-FUNCTIONALISED METALLOCENES USE FOR MARKING BIOLOGICAL MOLECULES

(30) Priorité: 14.02.2002 FR 0201858
(43) Date de publication de la demande: 10.11.2004
(73) Titulaire: BIOMERIEUX, 69280 Marcy-L'Etoile (FR)
(72) Inventeur: CHAIX-BAUVAIS, Carole, F-69970 Chaponnay (FR); MOUSTROU, Corinne, F-13008 Marseille (FR); NAVARRO, Aude-Emmanuelle, 84100 Orange (FR); BRISSET, Hugues, F-83270 Saint Cyr sur Mer (FR); GARNIER, Francis, F-94500 Champigny sur Marne (FR); MANDRAND, Bernard, F-69100 Villeurbanne (FR); SPINELLI, Nicolas, F-69007 Lyon (FR)
(74) Mandataire: Guerre, Dominique
(86) Numéro de dépôt international: PCT/FR2003/000484
(87) Numéro de publication internationale: WO 2003/068787

(56) Documents cités:
- WO-A-00/52063
- DATABASE CA [en ligne] CHEMICAL ABSTRACTS SERVICE, COLUMBUS, OHIO, US; FAN, RUI-LAN ET AL: "Synthesis and characterization of rare earth metal complexes of 1,1'-ferrocenediacetyl hydroxylamine" retrieved from STN Database accession no. 137:149219 CA XP002216436 & NEIMENGGU DAXUE XUEBAO, ZIRAN KEXUEBAN (2002), 33(1), 53-56, 2002,
- LINDNER, EKKEHARD ET AL: "Synthesis, Structure, and Electrochemistry of Osmametallocenophanes with Different Ring Size" ORGANOMETALLICS (1999), 18(4), 480-489, 1999, XP002216435
- LINDNER, E. ET AL: "Preparation, properties, and reactions of metal-containing heterocycles Part CV. Synthesis and structure of polyoxadiphosphaplatinaferrocenophane" JOURNAL OF ORGANOMETALLIC CHEMISTRY (2001), 630(2), 266-274, 2001, XP004297595

## Description

La présente invention concerne le domaine du marquage, notamment de molécules biologiques d'intérêt telles que les oligonucléotides et les peptides. Plus particulièrement, l'invention a pour objet de nouveaux métallocènes bifonctionnalisés, leur procédé d'obtention, leur utilisation pour le marquage d'oligonucléotides ou de peptides, les oligonucléotides et peptides marqués ainsi obtenus, ainsi qu'un support pour la synthèse supportée, fonctionnalisé par au moins un métallocène de l'invention.

Les métallocènes sont connus en tant que marqueurs d'oligonucléotides notamment pour la détection de fragments d'ADN ou d'ARN.

Ainsi, par exemple, le brevet US 6,211,356 décrit l'utilisation d'un métallocène monofonctionnel présentant la fonction phosphoramidite pour conférer, après couplage, un signal à de l'ADN et/ou de l'ARN qui sera alors délectable à l'aide d'un microscope électronique. L'addition du métallocène à l'oligonuclcotide est effectuée de façon manuelle et uniquement en bout de chaîne.

La demande de brevet US 6,232,062 décrit des conjugués oligonucléotide-ferrocène en tant que sonde électrochimique pour détecter une hybridation. Lesdits conjugués sont obtenus par synthèse supportée à partir d'une uridine modifiée par un ferrocène et utilisée comme synthon. Les deux synthons décrits sont une uridine 3'-phosphoramidite ayant un ferrocène en position 5 et une uridine 3'-phosphoramidite ayant un ferrocène en position 2'. La production d'oligonucléotides marqués par un ferrocène à l'aide de cette technique a pour inconvénient un coût élevé du fait de l'utilisation d'un nucléoside modifié par un ferrocène comme synthon (monomère compatible avec la synthèse) dont l'élaboration est complexe.

On connaît de C.J. Yu et al. (J. Org. Chem., 2001, 66. 2937-2942) des phosphoramidites modifiées chimiquement comportant un substituant ferrocène en position 2' du ribose. Ces phosphoramidites permettent de synthétiser des oligonucléotides comportant des ferrocènes à diverses positions, mais les synthèses de ces phosphoramidites font appel à des techniques de synthèse avec protection et déprotection des fonctions amines de l'hétérocycle et des autres fonctions OH libres et nécessitent de procéder dans des conditions permettant de conserver la sélectivité de la substitution.

Les demandes de brevet WO 00/31750 et WO 01/81446 décrivent des ferrocènes bifonctionnalisés à titre de sonde électrochimique observable, lesquels ferrocénes sont greffés à un polypyrrole d'une part et à un oligonucléotide d'autre part. Le couplage du ferrocène à l'oligonucléotide est réalisé entre l'ester activé (N-hydroxy-phtalimide) du ferrocène et la terminaison NH₂ de l'oligonucléotide déjà synthétisé. Ce couplage a pour inconvénients qu'il n'est pas compatible avec la synthèse automatisée des oligonucléotides et qu'il manque de sélectivité (réactions parasites sur les amines des bases).

La synthèse supportée de conjugués métallocène/oligonucléotide ou métallocène/peptide avec les métallocènes utilisés dans l'art antérieur est fastidieuse car elle nécessite la synthèse d'un nucléoside modifié par un ferrocène, puis du synthon phosphoramidite correspondant. Par ailleurs, le couplage de métallocène sur des oligonucléotides ou des peptides n'est pas toujours sélectif de sorte qu'il ne peut pas être automatisé sur les synthétiseurs actuels du commerce.

La demanderesse a maintenant découvert de nouveaux métallocènes bifonctionnalisés qui permettent de palier les inconvénients dus aux métallocènes de l'art antérieur, à savoir qu'ils permettent :
- une synthèse automatisée des conjugués métallocène/oligonucléotide ou métallocène/peptide,
- un couplage sélectif entre le métallocène et l'oligonucléotide ou le métallocène et le peptide et
- une amélioration des coûts de production desdits conjugués car le synthon utilisé est le métallocène en tant que tel et non sous forme de nucléoside modifié par un métallocène.

Ainsi, la présente invention a pour objet des métallocènes de formule (I) : 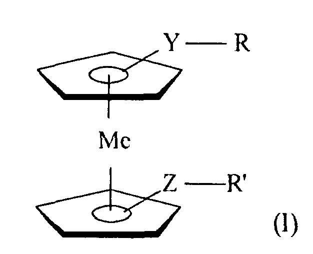
dans laquelle
- Me représente un métal de transition, de préférence choisi parmi Fe, Ru et Os,
- Y et Z, identiques, sont choisis parmi -(CH₂)ₙ-O-, -(CH₂)-O-((CH₂)₂-O]ₚ- et -(CH₂)_{q-}CONH-(CH₂)ᵣ-O-, ou bien
- Y est -(CH₂)ₛ-NH- et Z est -(CH₂)ₜ-COO-,
- n est un nombre entier compris entre 3 et 6,
- p est un nombre entier compris entre 1 et 4,
- q est un nombre entier compris entre 0 et 2
- r est un nombre entier compris entre 0 et 2,
- s est un nombre entier compris entre 2 et 5,
- t est un nombre entier compris entre 3 et 6,
- R et R' représentent des atomes d'hydrogène ou sont des groupements protecteurs utilisés dans la synthèse des oligonucléotides et des peptides et sont tels que définis ci-après :
   (i) lorsque Z et Y sont choisis parmi -(CH₂)ₙ-O-, -(CH₂)-O-[(CH₂)₂-O]ₚ- et -(CH₂)_{q}-CONH-(CH₂)ᵣ-O-, R est un groupement susceptible de laisser un groupement hydroxyle libre après déprotection, de préférence un groupement photolabile, le monométhoxytrityle, le diméthoxytrityle, le *tert*-butyldimétlylsilyle, l'acétyle ou le trifluoroacétyle, et R' est un groupement phosphoré susceptible de réagir avec un groupement hydroxyle libre, de préférence un groupement phosphodiester, phosphoramidite ou H-phosphonate et
   (ii) lorsque Y est -(CH₂)ₛ-NH- et Z est -(CH₂)ₜ-COO-, R représente un groupement protecteur des aminés, de préférence le 9-fluorényloxycarbonyle, le *tert-*butoxycarbonyle ou le benzyloxycarbonyle, et R' représente un atome d'hydrogène.

Un autre objet de l'invention consiste en un procédé de préparation d'un métallocène de l'invention, caractérisé en ce qu'il comprend les étapes suivantes :
(i) lorsque Z et Y sont choisis parmi -(CH₂)ₙ-O-, -(CH₂)-O-[(CH₂)₂-O]ₚ- et -(CH₂)_{q-}CONH-(CH₂)ᵣ-O- :
   - une étape de protection d'un des groupements hydroxyle d'un composé de formule générale (II) : 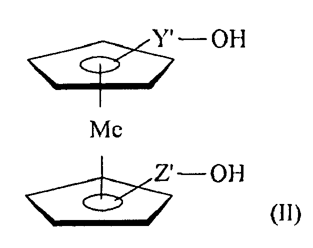
      dans laquelle Me est tel que défini précédemment,
      Y' et Z', identiques, sont choisis parmi -(CH₂)ₙ-, -(CH₂)-O-[(CH₂)₂-O]_{p'}-(CH₂)₂- et -(CH₂)_{q}-CONH-(CH₂)ᵣ-, n, q et r sont tels que définis précédemment, et p' est un nombre entier compris entre 0 et 3,
      par fixation d'un groupement susceptible de laisser un groupement hydroxyle libre après déprotection, de préférence choisi parmi un groupement photolabile, le monométhoxytrityle, le diméthoxytrityle, le *tert*-butyldiméthylsilyle, l'acétyle et le trifluoroacétyle, et
   - une étape de condensation, sur l'autre groupement hydroxyle laissé libre, d'un groupement phosphoré susceptible de réagir avec un groupement hydroxyle libre, de préférence choisi parmi les groupements phosphodiester, phosphoramidite et H-phosphonate ; et
(ii) lorsque Y est -(CH₂)ₛ-NH- et Z est -(CH₂)ₜ-COO- :
   - une étape de protection du groupement NH₂ d'un composé de formule générale (III) :

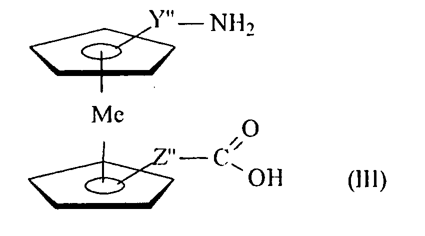

   dans laquelle
   - Me est tel que défini précédemment,
   - Y" est -(CH₂)ₛ- et
   - Z" est -(CH₂)ₜ-,
   - s ct t étant tels que définis précédemment,

   par fixation d'un groupement susceptible de laisser une fonction amine libre après déprotection, de préférence choisi parmi le 9-fluorényloxycarbonyle, le *tert-*butoxycarbonyle et le benzyloxycarbonyle.

Un autre objet de l'invention consiste en un (bis)hydroxymétallocène de formule générale (II) telle que décrite ci-dessus.

Un autre objet de l'invention consiste en un procédé de marquage :
- d'un oligonucléotide par un métallocène bifonctionnalisé de formule (1), dans laquelle Y et Z, identiques, sont choisis parmi -(CH₂)ₙ-O-, -(CH₂)-O-[(CH₂)₂-O]ₚ- et -(CH₂)_{q-}CONH-(CH₂)ₜ-O-, comprenant la substitution d'un ou plusieurs synthons de nucléotides par un ou plusieurs desdits métallocènes de formule (I) dans le cycle de synthèse dudit oligonucléotide, et
- d'un peptide par un métallocène bifonctionnalisé de formule (I), dans laquelle Y est -(CH₂)ₛ-NH- et Z est -(CH₂)ₜ-COO-, comprenant la substitution d'un ou plusieurs synthons d'acides aminés par un ou plusieurs desdits métallocènes de formule (I) dans le cycle de synthèse dudit peptide,

ainsi que les oligonucléotides et les peptides ainsi marqués.

Un autre objet de l'invention consiste en un support de synthèse d'oligonucléotides ou de peptides, fonctionnalisé en surface par au moins un métallocène de formule (I) de l'invention, respectivement.

Avant de détailler l'invention, on définit ci-après certains termes utilisés dans la description et les revendications.

Le terme « oligonucléotide » désigne un enchaînement d'au moins 2 nucléotides (désoxyribonucléotides ou ribonucléotides, ou les deux), naturels ou modifiés, susceptibles de s'hybrider, dans des conditions appropriées d'hybridation, avec un oligonucléotide au moins partiellement complémentaire. Par nucléoside, on entend un composé organique consistant en une base purine ou pyrimidine liée à un ose (ribose ou deoxyribose). Par nucléotide, on entend un composé organique consistant en une base purine ou pyrimidine liée à un ose (ribose ou deoxyribose) et à un groupe phosphate. Par nucléotide modifié, on entend par exemple un nucléotide comportant une base modifiée et/ou comportant une modification au niveau de la liaison internucléotidique et/ou au niveau du squelette. A titre d'exemple de base modifiée, on peut citer l'inosine, la méthyl-5-désoxycytidine, la diméthylamino-5-désoxyuridine, la diamino-2,6-purine et la bromo-5-désoxyuridine. Pour illustrer une liaison internucléotidique modifiée, on peut mentionner les liaisons phosphorothioate, N-alkylphosphoramidate, alkylphosphonate et alkylphosphotriester. Les alpha-oligonucléotides tels que ceux décrits dans FR-A-2 607 507 et les PNA qui font l'objet de l'article de M. Egholm et al., J. Am. Chem. Soc. (1992), 114, 1895-1897, sont des exemples d'oligonucléotides constitués de nucléotides dont le squelette est modifié.

Le terme « peptide » signifie notamment tout enchaînement d'au moins deux acides aminés, tels que protéine, fragment de protéine, oligopeptide qui a été extrait, séparé, isolé ou synthétisé, comme un peptide obtenu par synthèse chimique ou par expression dans un organisme recombinant. Sont inclus aussi tous les peptides dans la séquence desquels un ou plusieurs acides aminés de la série L sont remplacés par un ou plusieurs acides aminés de la série 1), et vice-versa ; tout peptide dont l'une au moins des liaisons CO-NH est remplacée par une liaison NH-CO ; tout peptide dont l'une au moins des liaisons CO-NH est remplacée par une liaison NH-CO, la chiralité de chaque résidu aminoacyle, qu'il soit impliqué ou non dans une ou plusieurs desdites liaisons CO-NH, étant soit conservée, soit inversée par rapport aux résidus aminoacyle constituant un peptide de référence (ou immunorétroïdes) ; et tout mimotope.

Pour illustrer les diverses classes des peptides concernés, on peut mentionner les hormones adrénocorticotropiques ou leurs fragments, les analogues d'angiotensine et leurs inhibiteurs, les peptides natriurétiques, la bradykinine et ses dérivés peptidiques, les peptides chimiotactiques, la dynorphine et ses dérivés, les endorphines et leurs dérivés, les encéphalines et leurs dérivés, les inhibiteurs d'enzyme, les fragments de fibronectine et leurs dérivés, les peptides gastrointestinaux, les peptides opioïdes, l'oxytocine, la vasopressine, la vasotocine et leurs dérivés, les protéines kinase.

Les métallocènes de l'invention sont utiles en tant que synthon pour la préparation de dérivés d'haptènes ou toutes autres molécules qui peuvent être synthétisées.

En particulier, les métallocènes de l'invention sont utiles dans la synthèse supportée des oligonucléotides et des peptides. Ils permettent le marquage d'oligonucléotides ou de peptides synthétisés de façon très sélective du fait des deux fonctions particulières qu'ils possèdent, à savoir deux fonctions hydroxyle telles que montrées dans la formule (II) pour la synthèse supportée des oligonucléotides, ou bien une fonction aminé et une fonction acide telles que montrées dans la formule (III) pour la synthèse supportée des peptides.

Dans le cas de la synthèse supportée des oligonuclcotides, les bras espaceurs fonctionnalisés Y et Z tels qu'indiqués dans la formule (I) possèdent chacun une fonction oxy donnant une fonction hydroxyle après déprotection et Y et Z sont choisis parmi -(CH₂)ₙ-O-, -(CH₂)-O-[(CH₂)₂-O]ₚ- et -(CH₂)_{q}-CONH-(CH₂)ᵣ-O-.

Selon un mode de réalisation de l'invention, Y et Z sont chacun -(CH₂)ₙ-O-, n étant égal à 3.

Selon un autre mode de réalisation, Y et Z sont chacun -(CH₂)-O-[(CH₂)₂-O]ₚ-, p étant égal à 2.

Dans le cas de la synthèse supportée des peptides, les bras espaceurs fonctionnalisés Y et Z tels qu'indiqués dans la formule (1) possèdent soit une fonction amide donnant une fonction amine après déprotection, soit une fonction acide et sont choisis parmi -(CH₂)ₛ-NH- et -(CH₂)ₜ-COO-, étant entendu que Y et Z ne peuvent pas être identiques.

Selon un mode de réalisation de l'invention, s est égal à 3 et t est égal à 4.

Le métal de transition Me utilisé dans les métallocènes de formule (I) de l'invention peut être tout métal de transition. De préférence, il est choisi parmi Fe, Ru et Os.

Selon un mode de réalisation de l'invention, Me est le fer.

Les groupements protecteurs utilisés dans la synthèse des oligonucléotides et des peptides sont tout groupement classiquement connu de l'homme du métier. Ils sont décrits par exemple dans Solid Phase Synthesis, A practical Guide, Steven A. Kates, Fernando Albericio, Ed Maral Dekker, 2000.

Dans le cas d'un métallocène de l'invention utile comme synthon dans la synthèse des oligonucléotides, l'un des groupements protecteurs doit être un groupement phosphoré capable de réagir soit avec un hydroxyle libre en 5' ou en 3' du nucléotide précédent dans la mesure où le métallocène de l'invention est placé après un nucléotide, soit avec un hydroxyle déprotégé du métallocène précédent dans la mesure où l'oligonucléotide comporte plusieurs métallocènes à la suite, soit avec un hydroxyle fibre d'un autre composé chimique pouvant servir par exemple de bras espaceur, tel que le poly(oxyde d'éthyléne). Les exemples de tels groupements protecteurs phosphorés comprennent les groupements phosphodiester, phosphoramidite et H-phosphonate, ainsi que leurs dérivés.

L'autre groupement protecteur du métallocène doit être capable de laisser un groupement hydroxyle libre après déprotection pour réagir soit avec un phosphore réactif (phosphodiester, phosphoramidite, H-phosphonate) du nucléotide suivant dans la mesure où le métallocène est placé avant un nucléotide, soit avec un phosphore réactif du métallocène suivant dans la mesure où au moins deux métallocèncs se suivent. A titre d'exemple de ce type de groupement protecteur, on peut citer les groupements photolabites, le monométhoxytrityle, le diméthoxytrityle, le *tert*-butydiméthylsilyle, l'acétyle et le trifluoroacétyle.

A titre d'exemples de groupement photolabile, on peut citer le 6-nitrovératryle, le 6-nitropipéronyle, le méthyl-6-nitrovératryle, le nitrovératrylcarbonyle, le méthyl-6-nitropipéronyle, le nitrobenzyle, le nitrobenzyloxycarbonyle, le dimethyldiméthoxybenzyle, le diméthyldiméthoxybenzyloxycarbonyle, le 5-bromo-7-nitroindolinyle, l'hydroxy-α-méthylcinnamoyle, le 2-oxyméthylène anthraquinone, le pyrényl méthoxycarbonyle.

Des exemples de groupement protecteur des amines comprennent le 9-fluorényloxycarbonyle, le *tert*-butoxycarbonyle et le benzyloxycarbonyle.

Un métallocène bifonctionnalisé de formule générale (I) : 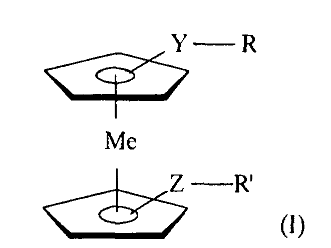
dans laquelle
- Me représente un métal de transition, de préférence choisi parmi Fe, Ru et Os,
- Y et Z, identiques, sont choisis parmi -(CH₂)ₙ-O-, -(CH₂)-O-[(CH₂)₂-O]ₚ- et -(CH₂)_{q-}CONH-(CH₂)ᵣ-O-, ou bien
- Y est -(CH₂)ₛ-NH- et Z est -(CH₂)ₜ-COO-,
- n est un nombre entier compris entre 3 et 6,
- p est un nombre entier compris entre 1 et 4,
- q est un nombre entier compris entre 0 et 2
- r cst un nombre entier compris entre 0 et 2,
- s est un nombre entier compris entre 2 et 5,
- t est un nombre entier compris entre 3 et 6,
- R et R' représentent des atomes d'hydrogène ou sont des groupements protecteurs utilisés dans la synthèse des oligonucléotides et des peptides, étant entendu que l'un au moins de R ou R' est un groupement protecteur utilisé dans la synthèse des oligonucléotides et des peptides et que R et R' sont tels que définis ci-après :
   (i) lorsque Z et Y sont choisis parmi -(CH₂)ₙ-O-, -(CH₂)-O-[(CH₂)₂-O]ₚ- et -(CH₂)_{q}-CONH-(CH₂)ₜ-O-, alors R et R' sont des groupements protecteurs utilisés dans la synthèse des oligonucléotides, et R est un groupement susceptible de laisser un groupement hydroxyle libre après déprotection, de préférence un groupement photolabile, le monométhoxytrityle, le diméthoxytrityle, le *tert*-butyldiméthylsilyle, l'acétyle ou le trifluoroacétyle, et R' est un groupement phosphoré susceptible de réagir avec un groupement hydroxyle libre, de préférence un groupement phosphodiester, phosphoramidite ou H-phosphonate et
   (ii) lorsque Y est -(CH₂)ₛ-NH- et Z est -(CH₂)ₜ-COO-, alors R est un groupement protecteur utilisé dans la synthèse des peptides et représente un groupement protecteur des amines, de préférence le 9-fluorényloxycarbonyle, le *tert*-butoxycarbonyle ou le benzyloxycarbonyle, et R' représente un atome d'hydrogène, constitue un objet préféré de l'invention.

Les métallocènes de l'invention sont préparés par un procédé nécessitant une ou deux étapes permettant d'obtenir les groupements protecteurs souhaités sur les bras espaceurs fonctionnalisés appropriés.

Ainsi, la présente invention a également pour objet un procédé de préparation d'un métallocène de l'invention, caractérisé en ce qu'il comprend les étapes suivantes :
(i) lorsque Z et Y sont choisis parmi -(CH₂)ₙ-O-, -(CH₂)-O-[(CH₂)₂-O]ₚ- et -(CH₂)_{q-}CONH-(CH₂)ᵣ-O- :
   - une étape de protection d'un des groupements hydroxyle d'un composé de formule générale (II): 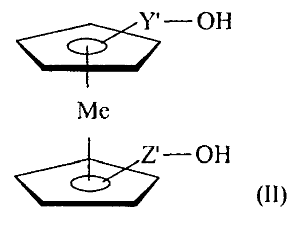
      dans laquelle Me est tel que défini précédemment,
      Y' et Z', identiques, sont choisis parmi -(CH₂)ₙ-, -(CH₂)-O-[(CH₂)₂-O]_{p'}-(CH₂)₂- et -(CH₂)_{q}-CONH-(CH₂)ᵣ-, n, q et r sont tels que définis précédemment, et p' est un nombre entier compris entre 0 et 3,
      par fixation d'un groupement susceptible de laisser un groupement hydroxyle libre après déprotection, de préférence choisi parmi un groupement photolabile, le monométhoxytrityle, le diméthoxytrityle, le *tert*-butyldiméthylsilyle, l'acétyle et le trifluoroacétyle, et
   - une étape de condensation, sur l'autre groupement hydroxyle laissé libre, d'un groupement phosphoré susceptible de réagir avec un groupement hydroxyle libre, de préférence choisi parmi les groupements phosphodiester, phosphoramidite et H-phosphonate ; et
(ii) lorsque Y est -(CH₂)ₛ-NH- et Z est -(CH₂)ₜ-COO- :
   - une étape de protection du groupement NH₂ d'un composé de formule générale (III) :

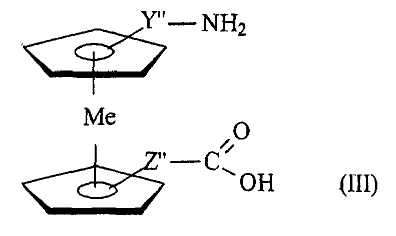

   dans laquelle
   - Me est tel que défini précédemment,
   - Y" est -(CH₂)ₛ- et
   - Z" est -(CH₂)ₜ-,
   - s et t étant tels que définis précédemment,

   par fixation d'un groupement susceptible de laisser une fonction amine libre après déprotection, de préférence choisi parmi le 9-fluorényloxycarbonyle, le *tert-*butoxycarbonyle et le benzyloxycarbonyle.

L'étape de protection d'un des groupements hydroxyle d'un composé de formule générale (II) par un groupement protecteur capable de laisser un groupement hydroxyle libre après déprotection, tel qu'un groupement photolabile, le monométhoxytrityle, le diméthoxytrityle, le *tert*-butyldiméthylsilyle, l'acétyle et le trifluoroacétyle, est effectuée dans des conditions bien connues de l'homme du métier telles que décrites dans Current Protocols in Nucleic Acid Chemistry (Volume 1), John Wiley & Sons, Inc., NY 1999.

De même, l'étape de condensation, sur l'autre groupement hydroxyle laissé libre du composé de formule (II), d'un groupement protecteur phosphoré tel qu'un groupement phosphodiester, phosphoramidite ou H-phosphonate est effectuée dans des conditions bien connues de l'homme du métier telles que décrites dans Current Protocols in Nucleic Acid Chemistry (Volume 1), John Wiley & Sons, Inc., NY 1999 et dans Protocols for Oligonucleotides and Analogs, Synthesis ans Properties, Ed. Sudhir Agrawal, Methods in Molecular Biology, Humana Presse, 1993.

Les composés de formule (II) particuliers définis ci-après sont de nouveaux composés qui constituent un autre objet de l'invention, ils sont choisis parmi les bis(hydroxy)métallocènes de formule générale (II) : 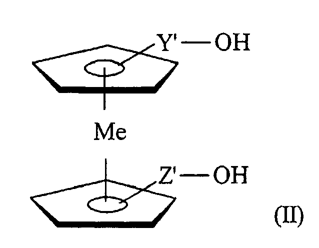
dans laquelle
- Me est un métal de transition, de préférence choisi parmi Fe, Ru et Os, Y' et Z', identiques, sont choisis parmi -(CH₂)ₙ, -(CH₂)-O-[(CH₂)₂-O]_{p'}-(CH₂)₂- et -(CH₂)_{q}-CONH-(CH₂)ᵣ-,
- n est un nombre entier compris entre 3 et 6,
- p' est un nombre entier compris entre 0 et 3,
- q est un nombre entier compris entre 0 et 2 et
- r est un nombre entier compris entre 0 et 2,

étant entendu que lorsque Me est Fe ou Ru et que Y' et Z' sont -(CH₂)ₙ-, alors n est 5 et lorsque Me est Fe et que Y' et Z' sont -(CH₂)-O-[(CH₂)₂-O]_{p'} -(CH₂)-, alors p' est 0.

Selon un mode de réalisation préféré, les composés de formule (II) possèdent au moins l'une des caractéristiques suivantes :
- Me est le fer, et
- Y' et Z' sont chacun -(CH₂)ₙ-, n étant égal à 3 ou bien Y' et Z' sont chacun -(CH₂)-O-[(CH₂)₂-O]_{p'}-(CH₂)₂-, p' étant égal à 0.

Les composés de formule (II) peuvent être obtenus de différentes façons selon la nature du bras espaceur Y' et Z'.

Pour obtenir un métallocène avec -(CH₂)ₙ- comme bras espaceurs, on greffe des fonctions aldéhyde sur un métallocène, puis on fait réagir le composé ainsi obtenu avec un diéthylphosphonoalkylate d'éthyle approprié pour obtenir un 1,1'-bis[(2-éthyloxycarbonyl)alcényl]métallocène, puis on effectue deux étapes de réduction pour réduire d'une part la double liaison, puis pour libérer l'alcool primaire, comme indiqué ci-dessous : 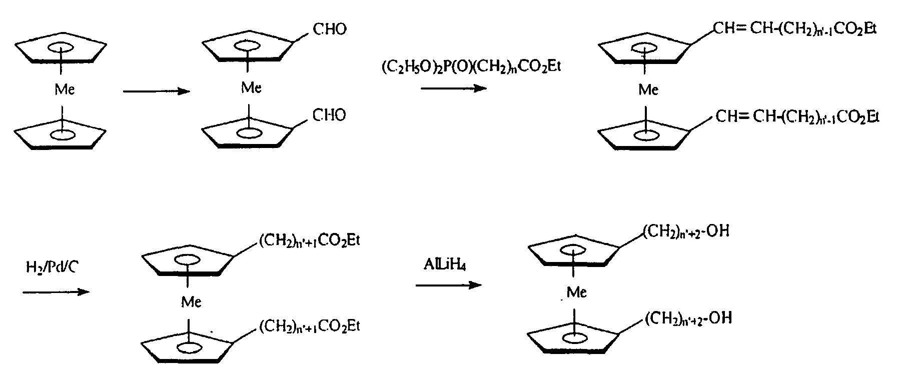
où Et est l'éthyle et n' est compris entre 2 et 4.

Pour obtenir un métallocène avec -(CH₂)-O-[(CH₂)₂-O]ₚ₋₁-(CH₂)₂- comme bras espaceurs, on fonctionnalise les groupements hydroxyle d'un bis-(hydroxyméthyl)métallocène en groupements 2-chloroéthyl(poly(oxyde d'éthylène)) appropriés en présence d'une base telle que NaOH, puis on convertit le radical chloro en iodo, puis en hydroxyle, comme indiqué ci-dessous : 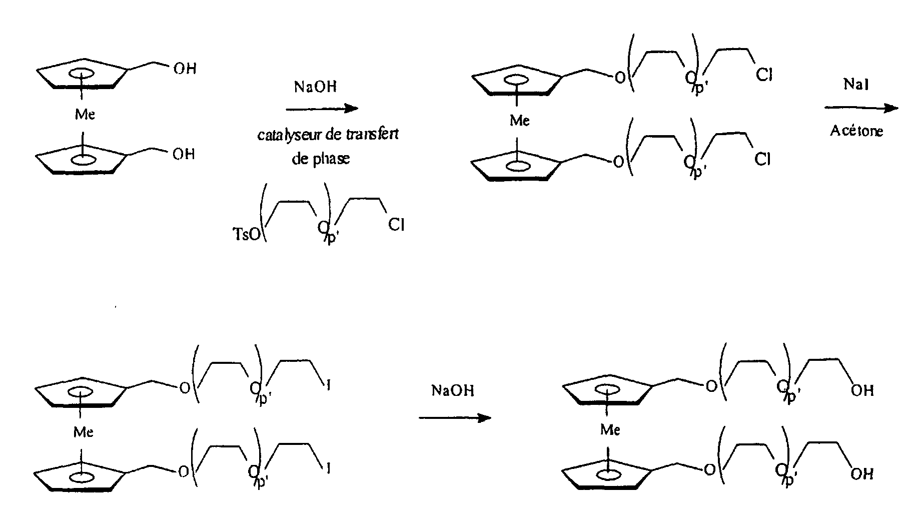
où Ts est le tosyle et p' est un nombre entier compris entre 0 et 3.

Pour obtenir un métallocène avec -(CH₂)_{q}-CONH-(CH₂)ᵣ-O- comme bras espaceurs, on traite un 1,1'-(N-hydroxyphtalimidecarbonylalkyl)métallocène approprié, tel qu'obtenu selon le mode opératoire décrit dans la demande WO01/81446, par de la trifluoroacetoxyalkylamine appropriée, puis on convertit le radical trifluoroacétoxy en hydroxyle comme indiqué ci-dessous : 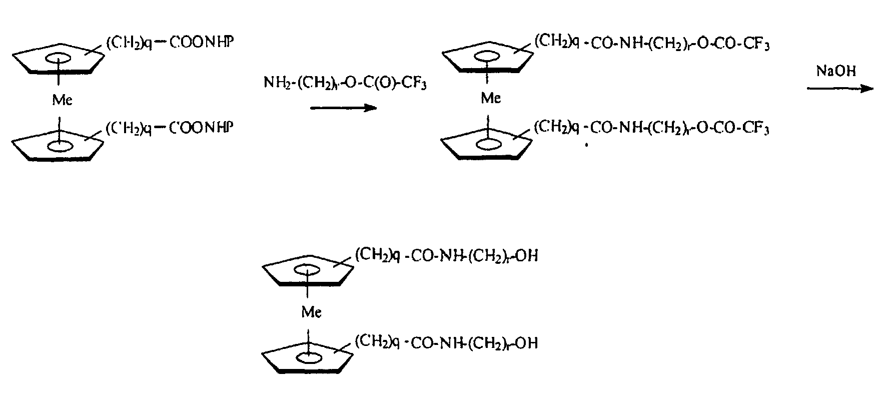
où q et r sont tels que définis précédemment

Le composé (III) peut être produit selon le mode opératoire suivant :
Un 1-*tert*-butoxycarbonylaminoalkyl-1'-iodométallocène approprié 1 est mis à réagir avec un iodure organométallique 2, puis, en fin de traitement, la fonction acide est libérée pour donner le composé (III), comme indiqué ci-dessous :

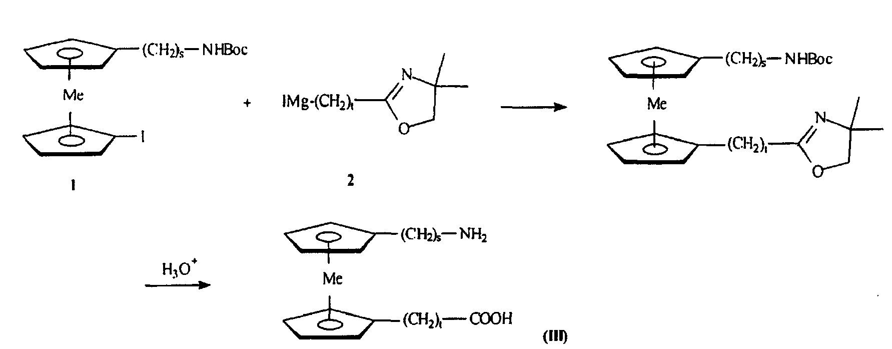

où s et t sont tels que décrits précédemment.

Le composé 2 peut lui-même être obtenu selon la synthèse suivante :

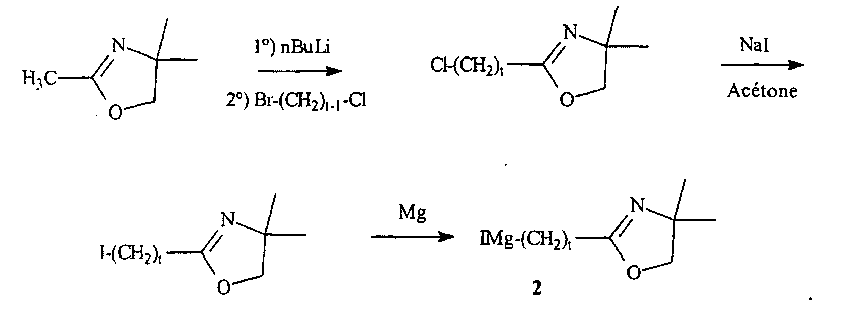

Le composé 1 peut être obtenu par réaction de 1,1'-iodométallocène 3 avec un iodure organométallique 4 comme suit : 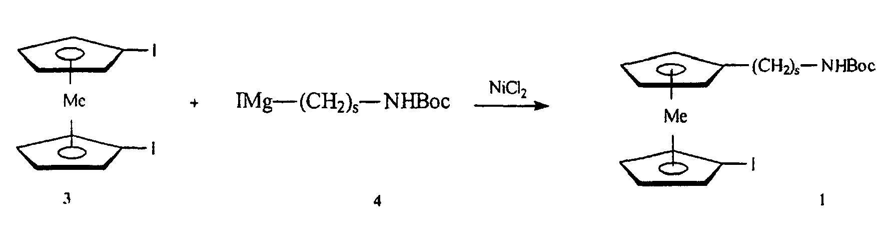
comme décrit dans :
a) « Comprehensive organic Synthesis», volume 3, Barry M. Trost and Ian Fleming
b) «Palladium Reagents and catalysts» Juio Tsuji Wiley & sons 1995

L'iodure organométallique 4 peut lui-même être obtenu à partir d'un iodure d'alkylamine en 2 étapes, comme suit : 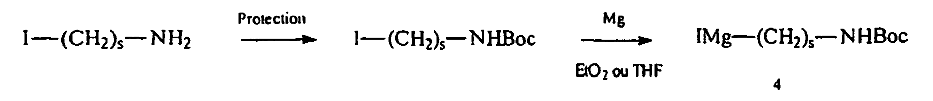
où s est tel que décrit précédemment,
comme décrit dans « Protective groups in Organic Chemistry » Greene - Wuts, Third edition, Wiley Interscience.

Enfin, le 1,1'-iodométallocène 3 peut lui-même être obtenu selon le mode opératoire suivant, comme décrit dans l'article D. Guillaneux, H. B. Kagan, J. Org. Chem. 1995, 60, 2502-2505.

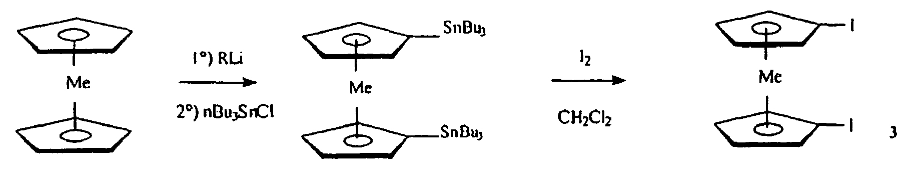

Les métallocènes de formule (I) ainsi obtenus peuvent alors être utilisés pour le marquage, notamment de molécules biologiques d'intérêt telles que les oligonucléotides et les peptides au cours de leur synthèse supportée.

Ainsi, un autre objet de l'invention consiste en un procédé de marquage d'un oligonucléotide ou d'un peptide par un métallocène bifonctionnalisé de formule (I) de l'invention, lequel procédé comprend la substitution d'un ou plusieurs synthons de nucléotides ou d'acides aminés par un ou plusieurs desdits métallocènes de formule (I) dans le cycle de synthèse dudit oligonucléotide ou dudit peptide.

Dans le cas de la synthèse des oligonucléotides, on utilise un ou plusieurs métallocènes de formule (1), dans laquelle Y et Z, identiques, sont choisis parmi -(CH₂)ₙ-O-, -(CH₂)-O-[(CH₂)₂-O]ₚ- et -(CH₂)_{q}-CONH-(CH₂)ᵣ-O-.

Dans le cas de la synthèse des peptides, on utilise un ou plusieurs métallocènes de formule (I) dans laquelle Y est -(CH₂)ₛ-NH- et Z est -(CH₂)ₜ-COO-.

La substitution des synthons de nucléotides ou d'acides aminés par des métallocènes de l'invention peut être réalisée sur les synthétiseurs actuels à n'importe quelle position de la chaîne. Selon un mode de réalisation de l'invention, la substitution remplit au moins l'une des conditions suivantes :
- elle est effectuée en positions 3' ou 5' dans le cas des oligonucléotides ou aux extrémités C-terminale ou N-terminale dans le cas des peptides et
- il y a au moins deux substitutions consécutives.

La substitution peut être mise en oeuvre facilement par l'homme du métier car elle consiste uniquement à remplacer un nucléotide ou un acide aminé par un métallocène de l'invention.

Ainsi, par exemple, dans le cas du cycle de condensation phosphoramidite tel que représenté sur le schéma 1 ci-dessous, l'un quelconque des nucléotides de cette chaîne, ou plusieurs, peut ou peuvent être remplacé(s) par un ou plusieurs métallocènes de formule (I) dans laquelle l'un des groupements protecteurs R ou R' est un phosphoramidite.

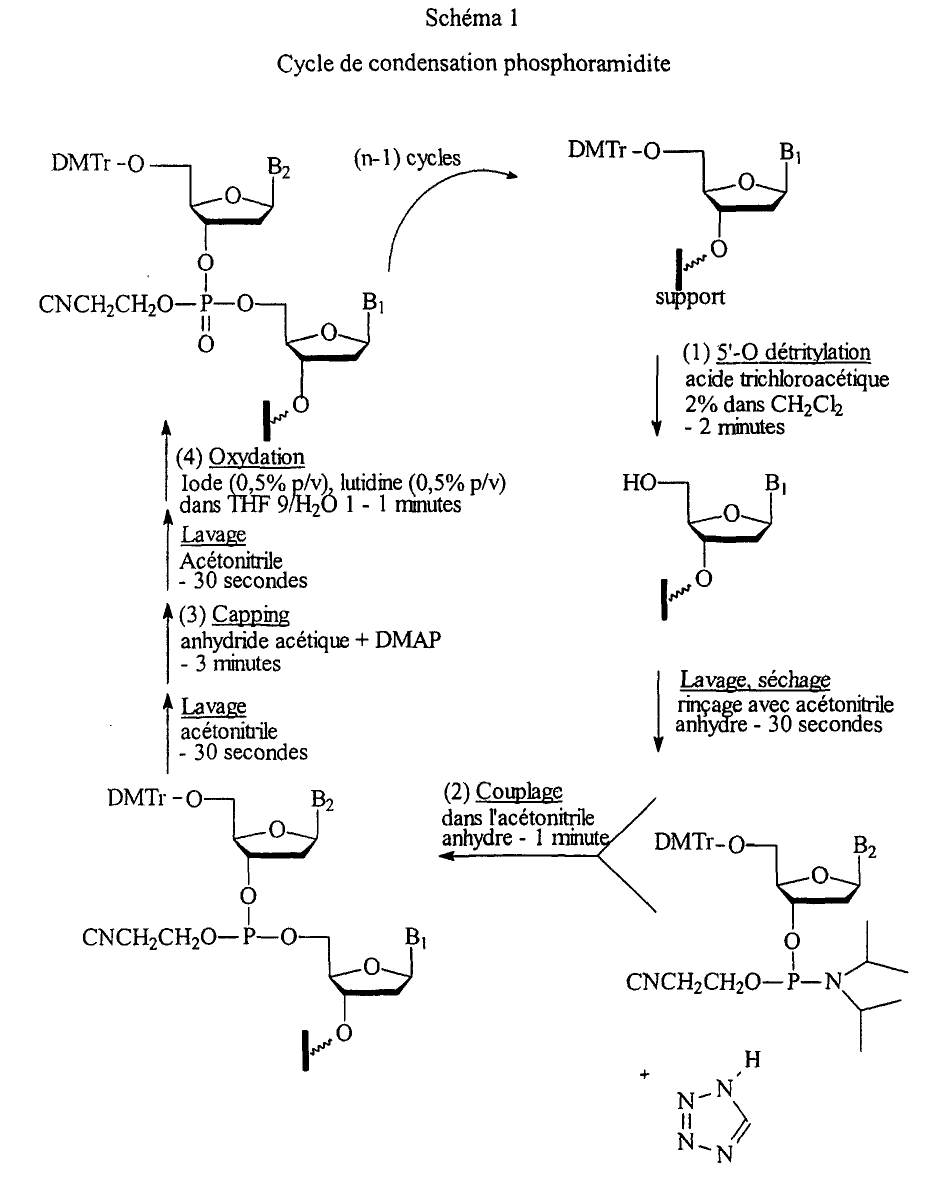

Selon un autre exemple, dans le cas du cycle en série « H-phosphonate » tel que représenté sur le schéma 2 ci-dessous, l'un quelconque des nucléotides de ce cycle, ou plusieurs, peut ou peuvent être remplacé(s) par un ou plusieurs métallocènes de formule (I) dans laquelle l'un des groupements protecteurs R ou R' est un H-phosphonate.

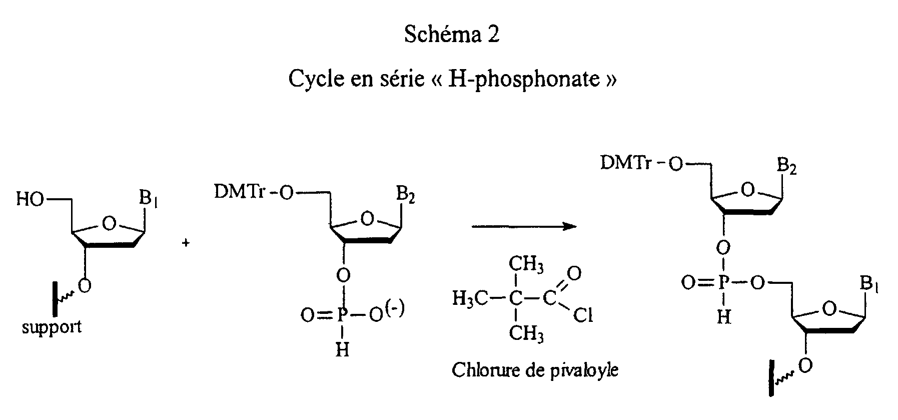

De même, selon un autre exemple, dans le cas du cycle de condensation « phosphotriester » tel que représenté sur le schéma 3 ci-dessous, l'un quelconque des nucléotides de ce cycle, ou plusieurs, peut ou peuvent être remplacé(s) par un ou plusieurs métallocènes de formule (I) dans laquelle l'un des groupements protecteurs R ou R' est un phosphodiester.

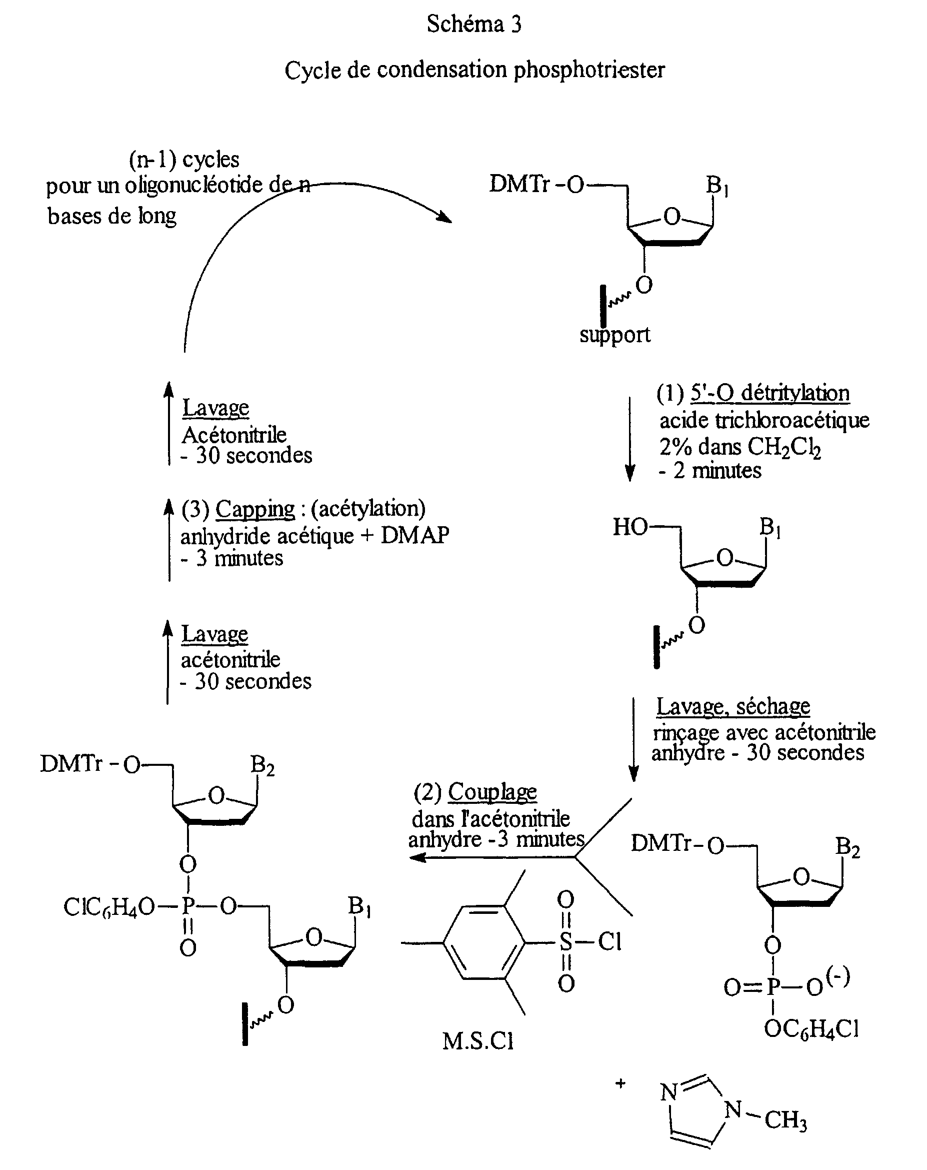

De même, l'homme du métier pourra facilement remplacer un ou plusieurs acides aminés par un ou plusieurs métallocènes de l'invention au cours de synthèses de peptides connues, telles que la synthèse selon la chimie du BOC (*tert-*butoxycarbonyle) ou du FMOC (9-fluorényloxycarbonyle).

Les oligonucléotides et peptides tels que marqués par les métallocènes de l'invention sont nouveaux et constituent un autre objet de l'invention.

Comme précédemment, les oligonucléotides sont marqués avec un ou plusieurs métallocènes issus de métallocènes de formule (I), dans laquelle Y et Z, chacun indépendamment, sont choisis parmi -(CH₂)ₙ-O-, -(CH₂)-O-[(CH₂)₂-O]ₚ- et -(CH₂)_{q-}CONH-(CH₂)ᵣ-O-, et les peptides sont marqués avec un ou plusieurs métallocènes issus de métallocènes de formule (I) dans laquelle Y est -(CH₂)ₛ-NH- et Z est -(CH₂)ₜ-COO-. Les métallocènes de formule II de l'invention s'intégrent dans les séquences d'oligonucléotides de façon à remplacer, d'un point de vue chimique, les nucléosides dans lesdites séquences. De façon similaire les métallocènes de formule III s'intègrent dans les séquences des peptides de façon à remplacer, d'un point de vue chimique les acides aminés dans lesdites séquences.

Selon un mode de réalisation préféré, les oligonucléotides ou peptides de l'invention comportent au moins un métallocène de l'invention en positions 3' ou 5', ou bien aux extrémités C-terminale ou N-terminale, respectivement.

Dans le cas où on vise à obtenir un oligonucléotide marqué en position 3', on peut utiliser un support solide sur lequel est greffé au moins un métallocène de l'invention, par réaction covalente de l'une de ses extrémités fonctionnalisées. Ce complexe support-métallocène(s) constitue un autre objet de l'invention.

A titre de support, on peut utiliser le support ci-dessous LCAA-CPG (Long Chain alkylamine controlled Pore Glass) qui est classiquement utilisé en synthèse oligonucléotidique.

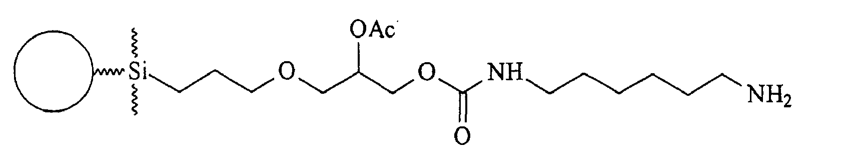

Le greffage du ou des métallocènes de l'invention sur le support peut être effectué par exemple selon le mode opératoire suivant : 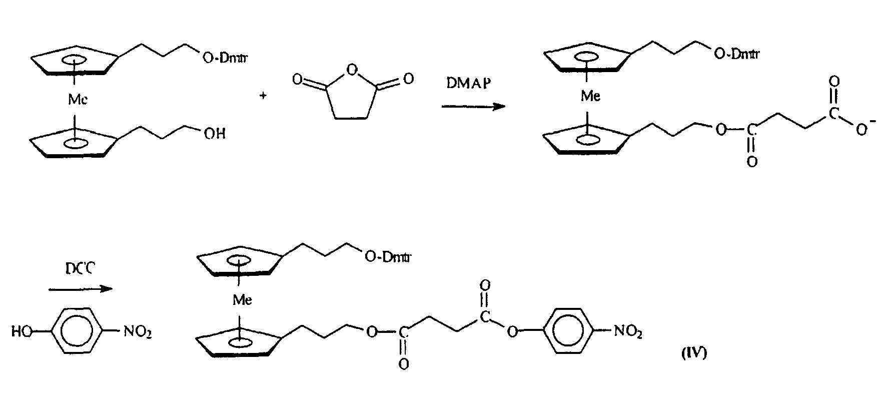 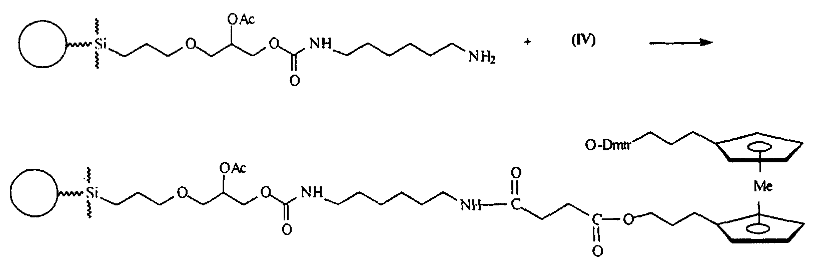
où Dmtr est le diméthoxytrityle, DMAP est la diméthylaminopyridine,
DCC est le dicyclohexylcarbodiimide,
comme décrit dans Matteucci & Caruthers, J. Am. Chem. Soc., 1981, 103, 3185-3191.

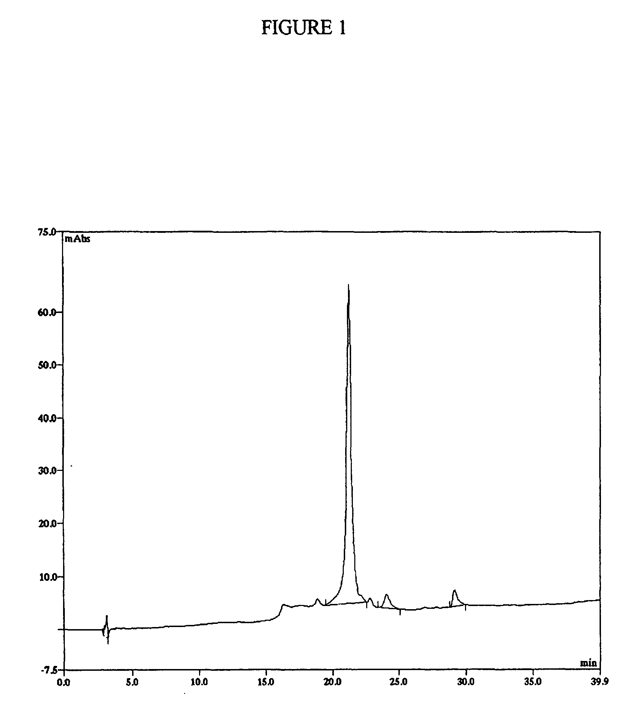

La présente invention sera mieux comprise à l'aide des exemples suivants qui font référence à la figure 1 annexée représentant le profil HPLC d'un oligonucléotide de l'invention présentant un ferrocène de l'invention en position 3', et qui sont donnés à titre illustratifs uniquement et non à titre limitatifs.

### Exemple 1 : Synthèse du 1-[3-O-diméthoxytritylpropyl]-1'-[3'-O-(2-cyanoéthyl-N,N-diisopropylphosphoramidityl)propyl]ferrocène 6

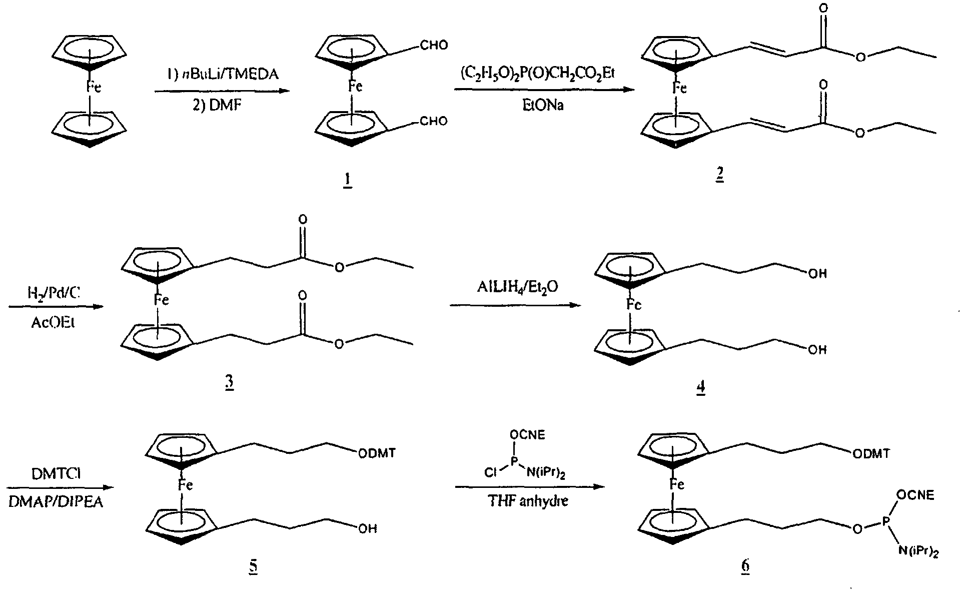

### 1.1 Synthèse du 1,1'-bisformylferrocène 1

On a traité 1 g (5,37 mmol) de ferrocène dissous dans 12 mL d'éther éthylique anhydre par 7,2 mL (11,56 mmol) de nBuLi (solution 1,6 M dans l'hexane) et par ajout de 1,74 mL (11,56 mmol) de N, N, N', N'-tétraméthyléthylène diamine. On a laissé la réaction sous argon et sous agitation pendant 20 heures à température ambiante. On a ajouté 1,33 ml (17,20 mmol) de DMF à -78°C. Après 2 heures d'agitation à -78°C, on a hydrolysé la mélange réactionnel (15 mL d'eau). On a extrait la phase aqueuse au dichlorométhane (3×15 mL). On a séché la phase organique résultante sur MgSO₄ puis on l'a concentré. On a purifié le résidu sur gel de silice avec un mélange pentane-acétate d'éthyle (50:50).

On a obtenu 0,62 g (2,56 mmol, 48%) du composé 1 sous la forme d'une pâte marron.
RMN ¹H (CDCl₃) : 4,62 (d, J = 9 Hz, 4H, H₂H₃-H_{2'}H_{3'}) ; 4,83 (d, J = 8,7 Hz, 4H, H₁H₄₋H_{1'}H_{4'}) ; 9,89 (m, 2H, 2CHO).
RMN ¹³C (CDCl₃) : 70,9 (C₂C₅) ; 74,20 (C₃C₄) ; 80,4 (C₁); 192,9 (C₆).
SM : 185 (60) ; 243 (M^{•+}, 95).

### 1.2 Synthèse du 1,1'-bis[(2-éthyloxycarbonyl)éthenyl]ferrocène 2

Dans un ballon tricol de 50 mL muni d'un réfrigérant et sous argon, on a introduit 0,094 g (4,08 mmol) de sodium et 25 mL d'éthanol absolu. Après consommation totale du sodium, on a refroidi la solution à 0°C, puis on a ajouté 0,809 mL (4,08 mmol) du diéthylphosphonoacétate d'éthyle et 0,470 g (1,94 mmol) de ferrocène 1,1'-carboxyaldéhyde 1 préalablement dissous dans 10 mL d'éthanol absolu.

Après retour à température ambiante et évaporation, on a purifié le résidu sur gel de silice avec un mélange cyclohexane-acétate d'éthyle (95 : 5).

On a obtenu 0,560 g (1,46 mmol, 75%) du composé 2 sous la forme de cristaux rouges.
RMN ¹H (CDCl₃) : 1,26 (t, J=7,15 et J=7,12 Hz, 6H, H₉H₁₀H₁₁-H_{9'}H_{10'}H_{11'}); 4,15 (q, J=7,14 et J=7,11 Hz, 4H, H₇H₈-H_{7'}H_{8'}) ; 4,31 (m, 4H, H₂H₃-H₂,H_{3'}); 4,38 (m, 4H, H₁H₄-H_{1'}H_{4'}) ; 5,91 (d, J=15,80 Hz, 2H, H₆-H_{6'}); 7,33 (d, J=15,79 Hz, 2H, H₅-H_{5'}).
RMN ¹³C (CDCl₃) : 14,2 (C₁₀) ; 60,1 (C₉) ; 69,7 (C₂C₅) ; 72,2 (C₃C₄) ; 79,9 (C₁) ; 116,2 (C₇), 143,7 (C₆) ; 166,9 (C₈).
SM : 382 (M^{•+}, 85).

### 1.3 Synthèse du 1,1'-bis[(2-éthyloxycarbonyl)éthyl]ferrocène 3

Dans un ballon de 100 mL, on a introduit 0,400g (1,05 mmol) de composé 2, 0,100 g (0,94 mmol) de palladium sur charbon (Pd/C à 10%) et 40 mL d'acétate d'éthyle. La solution a soigneusement été dégazée par bullage d'un flux d'argon (environ 30 minutes). On a mis à buller de l'hydrogène contenu dans un ballon de baudruche jusqu'à saturation de la solution. On a disposé un ballon de baudruche rempli d'hydrogène au dessus du montage. On a alors agité le mélange réactionnel vigoureusement pendant 48 à 72 heures.

Après filtration et concentration, on a obtenu 0,400 g (1,03 mmol, 99%) du composé 3 sous la forme d'une huile jaune.
RMN ¹H (CDCl₃) : 1,19 (t, J=7,15 et J=7,12 Hz, 6H, H₁₁H₁₂H₁₃-H_{11'}H_{12'}H_{13'}) ; 2,43 (m, 4H, H₇H₈-H_{7'}H_{8'}) ; 2,57 (m, 4H, H₅H₆-H_{5'}H_{6'}) ; 3,64 (s, 8H, H₁H₂H₃H₄₋H_{1'}H_{2'}H_{3'}H_{4'}) ; 4,06 (q, J=7,13 et J=7,15 Hz, 4H, H₉H₁₀-H_{9'}H_{10'}).

### 1.4 Synthèse du 1,1'-bis(3-hydroxypropyl)ferrocène 4

Dans un ballon tricol muni d'un réfrigérant, sous agitation et sous argon, on a introduit 0,140 g (3,70 mmol) d'AlLiH₄. A l'aide d'une seringue, on a ajouté 7 mL d'éther éthylique anhydre. On a ajouté goutte à goutte 1,43 g (3,70 mmol) d'ester 3 dissous dans 9,5 mL d'éther éthylique anhydre de manière à maintenir un reflux constant. Le mélange a pris un aspect visqueux nécessitant l'addition de 15 mL de THF rigoureusement anhydre afin de faciliter la solubilisation des composés. On a contrôlé la réaction par CCM (élution : cyclohexane-acétate d'éthyle (80 : 20)). Au bout de 40 minutes d'agitation, on a décomposé l'excès de lithien par addition lente d'eau (15 mL) tout en maintenant l'agitation. On a observé la formation d'un précipité blanc de lithine. Après filtration, on a extrait la phase aqueuse à l'éther éthylique (2x25 mL). On a combiné les phases organiques, on les a séchées sur MgSO₄ puis on les a concentrées.

On a recueilli 0,810 g (2,68 mmol, 72%) du composé 4 sous la forme d'une huile jaune.
RMN ¹H (CDCl₃) : 1,54 (m, 4H, H₇H₈-H_{7'}H_{8'}) ; 2,12 (t, J=7,81 et J=7,08 Hz, 4H, H₅H₆-H_{5'}H_{6'}) ; 3,43 (t, J=6,12 Hz, H₉H₁₀-H_{9'}H_{10'}) ; 3,89 (m, 8H, H₁H₂H₃H₄₋H_{1'}H_{2'}H_{3'}H_{4'}).
RMN ¹³C (CDCl₃) : 25,7 (C₆) ; 34,1 (C₇) ; 62,3 (C₈) ; 69,0 (C₂C₅) ; 64,4 (C₃C₄) ; 70,3 (C_{1'}C_{2'}C_{3'}C_{4'}C_{5'}) ; 89,1 (C₁).
SM : 161 (21) ; 179 (40) ; 302 (M^{•+}, 100).

### 1.5 Synthèse du 1-[3-O-dimèthoxytritylpropyl]-1'-[3'-hydroxypropyl]ferrocène 5

Dans un ballon de 25 mL, on a introduit successivement 200 mg (0,662 mmol) de 1,1'-dihydroxypropylferrocène 4 et 16 mg (0,132 mmol) de DMAP. Après 2 coévaporations successives par 5 mL de pyridine anhydre, on a repris l'huile obtenue avec 5 mL de pyridine anhydre. On a ajouté 247 mg (0,728 mmol) de chlorure de 4,4'-diméthoxytrityle et 115 µL (0,662 mmol) de N,N-éthyldiisopropylamine. On a laissé le mélange réactionnel sous agitation à température ambiante sous flux d'azote. On a suivi l'avancement de la réaction par CCM (élution : dichlorométhane-méthanol-TEA 89:10:1). Après élution, les plaques ont été systématiquement révélées dans un mélange éthanol-acide sulfurique. Après 4 heures d'agitation à température ambiante, on a ajouté 2 mL de méthanol au mélange réactionnel, afin de neutraliser le chlorure de 4,4'-diméthoxytrityle n'ayant pas réagi. Après concentration de moitié, on a repris le résidu au dichlorométhane (25 mL), on l'a lavé avec une solution aqueuse saturée en NaHCO₃, puis à l'eau (5×25 mL). Après séchage sur MgSO₄ et concentration, on a fait coévaporer le brut par 2×10 mL de toluène, puis on a laissé sous vide toute une nuit. On a purifié le mélange sur gel de silice (préalablement neutralisé par de la TEA) avec des mélanges dichlorométhane-méthanol de polarité croissante.

On a isolé 304 mg (76%) du composé monotritylé 5. Ce dernier se présente sous la forme d'une huile orangée.
RMN ¹H (acétone D6) : 1,64-1,72 (m, 2H, H₇,H₈,) ; 1,75-1,86 (m, 2H, H₇H₈) ; 2,38-2,53 (m, 4H, H₅H₆-H_{5'}-H_{6'}) ; 3,08-3,14 (t, 2H, H₉H₁₀) ; 3,52-3,58 (t, 2H, H₉,H_{10'}) ; 3,78, 3,79 (2s, 6H, -OCH₃) ; 3,95-3,98 (m, 8H, H₁H₂H₃H₄-H_{1'}H_{2'}H_{3'}H_{4'}) ; 6,82-7,68 (m, 13H, Ar).

### 1.6 Synthèse du 1-[3-O-diméthoxytritylpropyl]-1'-[3'-O-(2-cyanoéthyl-N,N-diisopropylphosphoramidityl)propyl]ferrocène 6

Dans un ballon de 25 mL, on a introduit successivement 255 mg (0,42 mmol) du composé ferrocène ODMT 5 et 7 mg (0,05 mmol) de DMAP. Après des coévaporations successives par 2×2 mL de pyridine anhydre et 2×2 mL de THF anhydre, on a repris le résidu par 3 mL de THF anhydre. On a placé le mélange réactionnel sous flux d'azote, puis on a ajouté 147 µL (0,84 mmol) de N,N-éthyldiisopropylamine en une seule fois. On a ajouté alors lentement à la seringue en verre 104 µL (0,46 mmol) de 2-cyanoéthyldiisopropylchlorophosphoramidite (l'addition dure environ 10 minutes). Après la moitié de l'addition, on a observé la formation d'un précipité. Après 3h30 d'agitation à température ambiante, on a contrôlé la réaction par CCM (élution : pentane-acétate d'éthyle, 70:30). Le phosphoramidite formé étant très réactif, il ne subit pas le traitement classiquement utilisé. On a concentré le brut de moitié. La colonne de silice (assez courte) a été montée avec un mélange pentane-TEA (0,5%) pour neutraliser la silice, puis rincée au pentane pur. Après dépôt rapide du brut, le produit a été élué avec un mélange pentane-acétate d'éthyle (85:15) en poussant avec de l'argon pour accélérer la migration, afin de limiter au maximum le contact du produit avec la silice. Après concentration, on a obtenu 190 mg (56%) d'une huile. On a placé le produit sous vide pendant 12 heures puis on l'a conservé à -20°C.

Avant utilisation de ce produit pour la synthèse des ODN modifiés, il est préférable de vérifier la présence éventuelle de produits de dégradation par une RMN du phosphore et d'effectuer une purification rapide du produit si cela s'avère nécessaire.
RMN ³¹P (CD₃CN) : 148,25 (P).

### Exemple 2 : Synthèse d'un oligonucléotide 22mer 3'Fc-C7-NH₂ 7

La séquence de l'ODN 7 est :

On a introduit 17 mg de support (2-diméthoxytrityloxymethyl-6-fluorenylmethoxycarbonylamino-hexane-1-succinoyl)-long chain alkylamino-CPG 1000) fonctionnalisé à 59 µmol/g (Glen Research, Sterling US) dans une colonne de synthèse (Applied Biosystems, Courtaboeuf, France). On a mis en solution 100 mg de 6 (0.124 mmol) dans 1,24 mL d'acétonitrile anhydre (AB, France). On a utilisé la solution de 6 en position 5 d'un synthétiseur AB 394, suivant le même protocole opératoire que pour les phosphoramidites commerciaux (A, C, G, T). On a effectué la synthèse de l'oligonucléotide 7 avec le programme standard 1µM dont l'étape de couplage des phosphoramidites a été modifiée comme suit : deux prélèvements de 3,5 s de la solution de phosphoramidite (au lieu d'un prélèvement comme dans le programme standard) intercalés par une pose de 15 s et suivis d'une pose de 25 s. Le rendement global de couplage par cycle a été de 97.5%. Après traitement de la CPG à l'ammoniaque aqueuse 30% (55°C pendant 16 h), on a concentré le surnageant au Speed Vac. On a repris le culot dans 1mL H₂O et on a purifié 7 sur colonne préparative (Merck Lichrospher RP18E, 12µ, 100Å, 300x7.5).

On a concentré les fractions au rotavapor puis on les a coévaporées 4 fois par H₂O avant lyophilisation dans un eppendorf. On a obtenu 15 DO (unités d'absorbance à 260 nm) de produit pur.

La pureté du produit a été vérifiée par analyse HPLC effectuée sur une colonne Waters Deltapak C₁₈ 5µ 3001Å (3,9x150 mm). La figure 1 donne le chromatogramme obtenu à 260 nm.
Spectrométrie de masse (MALDI-TOF), Voyager DE (Perseptive Biosystem) :
masse théorique m/z : 7352.9, masse observée m/z : 7338.3.

### Exemple 3 : préparation d'un support pour la synthèse d'oligonucléotides

### 3.1 Synthèse du sel de triethylammonium du 1-[3-O-(p,p'-diméthoxytrityl)propyl]-1'-[3'-O-(succinate)propyl]ferrocène 8

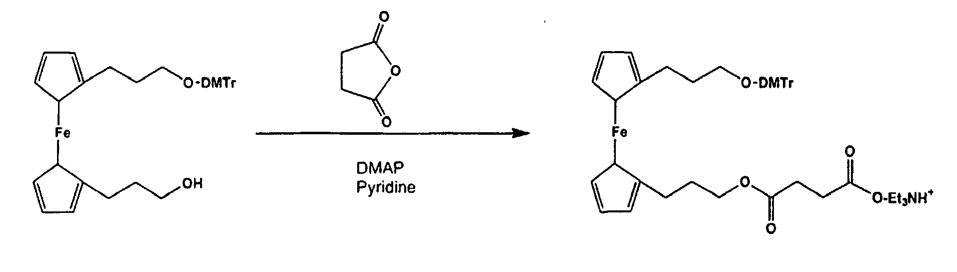

On a agité 149 mg (247 µmol, 1 eq.) de 1-[3-O-(*p,p'*-diméthoxytrityl)propyl]-1'-[3'-hydroxypropyl]ferrocène 5,67 mg (667 µmol, 2,7 eq.) d'anhydride succinique et 7 mg (25 µmol, 0,1 eq.) de 4*-N*,*N*-diméthylaminopyridine (DMAP), avec 180mL (1,3 mmol, 5,3 eq.) de triéthylamine dans 2 mL de dichlorométhane anhydre sous atmosphère inerte. Au bout de 3h, le mélange réactionnel a été partitionné entre du bicarbonate de sodium aqueux (3 X 10mL) et du dichlorométhane (40 mL). On a séché les phases organiques sur du sulfate de sodium, on les a filtrées et fait évaporer et purifiées sur colonne de gel de silice (gradient de MeOH dans CH₂Cl₂) pour donner 160 mg (198 µmol, 80 %) de produit désiré.
Rf (2% MeOH/CH₂Cl₂) = 0,8
RMN ¹H : δppm (CDCl₃) = 7,34 (m, 9H, DMTr) ; 6,82 (m, 4H,DMTr) ; 4,12 (t, 2H, J=6,36 Hz, -*CH*₂OCOCH₂-) ; 3,96 (m, 8H, ferrocène) ; 3,79 (s, 6H, 2XOCH₃) ; 3,08 (m, 8H, -CH₂-O-DMTr) ; 2,64 (m, 4H, O-CO-CH₂-CH₂-COO⁻) ; 2,42 (m, 4H, 2XC*H*_{*2-*}Ferrocène) ; 1,82 (m, 4H, 2X-CH₂-C*H*_{*2*}-CH₂-).

### 3.2 Fixation sur un support de type LCAA-CPG (Long Chain Alkyl Amin- Controled Pore Glass)

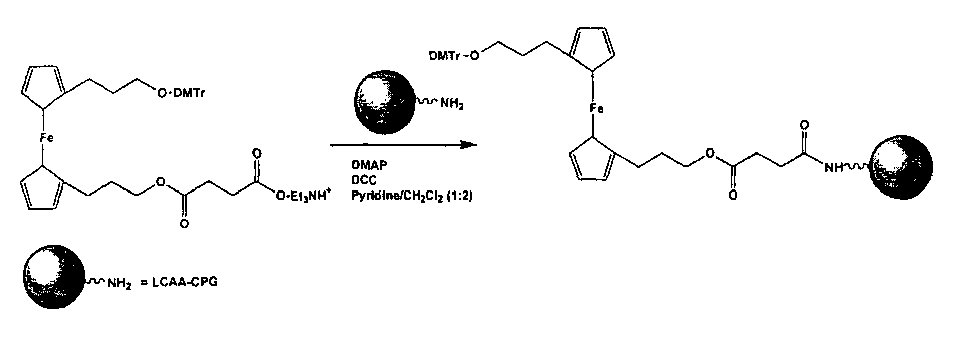

On a mis sous agitation mécanique dans 3 mL d'un mélange pyridine/dichlorométhane (1 : 2), pendant 48 h, 40,3 mg (50 µmol) du sel de triethylammonium du 1-[(*p*,*p*'-diméthoxytrityl)propanol]-1'-(propanol succinate) ferrocène obtenu ci-dessus, 500 mg du support LCAA-CPG (500 Å), 600mg (3 mmol) de dicyciohexytcarbodiimide (DCC), 40 mg (0,32 mmol) de diméthylaminopyrridine (DMAP) et 210 µL (1,5 mmol) de triéthylamine. On a ensuite filtré les billes de silice et on les a lavées successivement avec de la pyridine, du dichlorométhane, du méthanol, du dichlorométhane et de l'éther (50 mL de chaque).

On a ensuite masqué les fonctions NH₂ résiduelles en faisant réagir 1 mL d'anhydride acétique en présence de 1 mL de pyridine et de 20 mg de DMAP sur les billes de CPG pendant 2 h. On a ensuite filtré les billes et on les a rincées successivement avec du dichlorométhane, du méthanol, du dichlorométhane et de l'éther (25 mL de chaque). On les a séchées sous vide poussé jusqu'à ce que l'échantillon atteigne un poids constant.

On a estimé la fonctionnalisation du support en dosant le cation diméthoxytrityle relargué après avoir soumis un aliquote de support à un traitement acide. On a obtenu une fonctionnalisation de 0,1 µmol/mg.

## Revendications

1. Métallocène bifonctionnalisé de formule générale (I) : 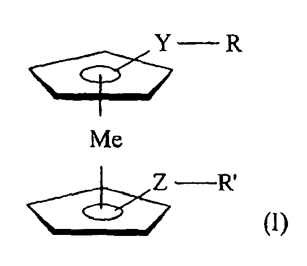
dans laquelle
- Me représente un métal de transition, de préférence choisi parmi Fe, Ru et Os,
- Y et Z, identiques, sont choisis parmi -(CH₂)ₙ-O-, -(CH₂)-O-[(CH₂)₂-O]ₚ- et -(CH₂)_{q-}CONH-(CH₂)ᵣ-O-, ou bien
- Y est -(CH₂)ₛ-NH- et Z est -(CH₂)ₜ-COO-,
- n est un nombre entier compris entre 3 et 6,
- p est un nombre entier compris entre 1 et 4,
- q est un nombre entier compris entre 0 et 2
- r est un nombre entier compris entre 0 et 2,
- s est un nombre entier compris entre 2 et 5,
- t est un nombre entier compris entre 3 et 6,
- R et R' représentent des atomes d'hydrogène ou sont des groupements protecteurs utilisés dans la synthèse des oligonucléotides et des peptides, étant entendu que l'un au moins de R ou R' est un groupement protecteur utilisé dans la synthèse des oligonucléotides et des peptides et que R et R'sont tels que définis ci-après :
(i) lorsque Z et Y sont choisis parmi -(CH₂)ₙ-O-, -(CH₂)-O-[(CH₂)₂-O]ₚ- et -(CH₂)_{q}-CONH-(CH₂)ᵣ-O-, alors R et R' sont des groupements protecteurs utilisés dans la synthèse des oligonucléotides, et R est un groupement susceptible de laisser un groupement hydroxyle libre après déprotection, de préférence un groupement photolabile, le monométhoxytrityle, le diméthoxytrityle, le *tert*-butyldiméthylsilyle, l'acétyle ou le trifluoroacétyle, et R' est un groupement phosphoré susceptible de réagir avec un groupement hydroxyle libre, de préférence un groupement phosphodiester, phosphoramidite ou H-phosphonate et
(ii) lorsque Y est -(CH₂)ₛ-NH- et Z est -(CH₂)ₜ-COO-, alors R est un groupement protecteur utilisé dans la synthèse des peptides et représente un groupement protecteur des amines, de préférence le 9-fluorényloxycarbonyle, le *tert*-butoxycarbonyle ou le benzyloxycarbonyle, et R' représente un atome d'hydrogène.

2. Métallocène selon la revendication 1, **caractérisé en ce que** Me est le fer.

3. Métallocène selon l'une des revendications 1 ou 2, **caractérisé en ce que** Y et Z sont choisis parmi -(CH₂)ₙ-O-, -(CH₂)-O-[(CH₂)₂-O]ₚ- et -(CH₂)_{q}-CONH-(CH₂)ᵣ-O-.

4. Métallocène selon l'une des revendications 1 à 3, **caractérisé en ce que** Y et Z sont chacun -(CH₂)ₙ-O-, n étant égal à 3.

5. Métallocène selon l'une des revendications 1 à 3, **caractérisé en ce que** Y et Z sont chacun -(CH₂)-O-[(CH₂)₂-O]ₚ-, p étant égal à 2.

6. Métallocène selon l'une des revendications 1 ou 2, **caractérisé en ce que** Y est -(CH₂)ₛ-NH-, Z est -(CH₂)ₜ-COO-.

7. Métallocène selon la revendication 6, **caractérisé en ce que** s est égal à 3 et t est égal à 4.

8. Procédé de préparation d'un métallocène de formule (1) selon l'une quelconque des revendications 3 à 5, **caractérisé en ce qu'**il comprend les étapes suivantes :
- une étape de protection d'un des groupements hydroxyle d'un composé de formule générale (II) : 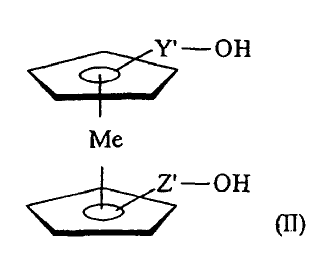
dans laquelle Me est tel que défini dans les revendications précédentes,
Y' et Z', identiques, sont choisis parmi -(CH₂)ₙ-, -(CH₂)-O-[(CH₂)₂-O]_{p'}-(CH₂)₂- et -(CH₂)_{q}-CONH-(CH₂)ᵣ-, n, q et r sont tels que définis tels que définis dans les revendications précédentes, et p' est un nombre entier compris entre 0 et 3,
par fixation d'un groupement susceptible de laisser un groupement hydroxyle libre après déprotection, de préférence choisi parmi un groupement photolabile, le monométhoxytrityle, le diméthoxytrityle, le *tert*-butyldiméthylsilyle, l'acétyle et le trifluoroacétyle, et
- une étape de condensation, sur l'autre groupement hydroxyle laissé libre, d'un groupement phosphoré susceptible de réagir avec un groupement hydroxyle libre, de préférence choisi parmi les groupements phosphodiester, phosphoramidite et H-phosphonate.

9. Procédé de préparation d'un métallocène de formule (I) selon l'une des revendications 6 ou 7, **caractérisé en ce qu'**il comprend les étapes suivantes :
- une étape de protection du groupement NH₂ d'un composé de formule générale (III) : 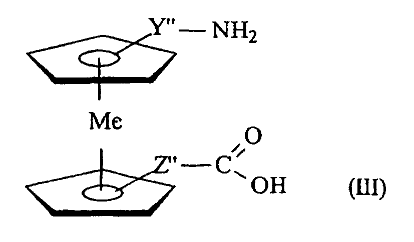
dans laquelle
- Me est tel que défini dans les revendications précédentes,
- Y" est -(CH₂)ₛ- et
- Z" est -(CH₂)ₜ-,
- s et t étant tels que définis dans les revendications précédentes, par fixation d'un groupement susceptible de laisser une fonction amine libre après déprotection, de préférence choisi parmi le 9-fluorényloxycarbonyle, le *tert-*butoxycarbonyle et le benzyloxycarbonyle.

10. Bis(hydroxy)métallocène de formule générale (II) : 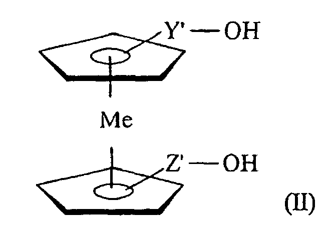
dans laquelle
- Me est un métal de transition, de préférence choisi parmi Fe, Ru et Os, Y' et Z', identiques, sont choisis parmi -(CH₂)ₙ-, -(CH₂)-O-[(CH₂)₂-O]_{p'}-(CH₂)₂- et
- (CH₂)_{q}-CONH-(CH₂)ᵣ-,
- n est un nombre entier compris entre 3 et 6,
- p' est un nombre entier compris entre 0 et 3,
- q est un nombre entier compris entre 0 et 2 et
- r est un nombre entier compris entre 0 et 2,
étant entendu que lorsque Me est Fe ou Ru et que Y' et Z' sont -(CH₂)ₙ-, alors n est 5 et lorsque Me est Fe et que Y' et Z' sont -(CH₂)-O-[(CH₂)₂-O)_{p'}-(CH₂)-, alors p' est 0.

11. Bis(hydroxy)métallocène selon la revendication 10, **caractérisé en ce que** Me est le fer.

12. Bis(hydroxy)métallocène selon la revendication 10, **caractérisé en ce que** Y' et Z' sont chacun -(CH₂)ₙ-, n étant égal à 3.

13. Bis(hydroxy)métallocène selon l'une des revendications 10 ou 11, **caractérisé en ce que** Y' et Z' sont chacun -(CH₂)-O-[(CH₂)₂-O]_{p'}-(CH₂)₂-, p' étant égal à 0.

14. Procédé de marquage d'un oligonucléotide par un métallocène bifonctionnalisé de formule (I) selon l'une quelconque des revendications 3 à 5, **caractérisé en ce qu'**il comprend la substitution d'un ou plusieurs synthons de nucléotides par un ou plusieurs desdits métallocènes de formule (I) dans laquelle R et R' sont des groupements protecteurs utilisés dans la synthèse des oligonucléotides, dans le cycle de synthèse dudit oligonucléotide.

15. Procédé selon la revendication 14, **caractérisé en ce que** la substitution est effectuée en positions 3' ou 5' en remplacement du ou des premiers ou derniers nucléotides, respectivement.

16. Procédé de marquage d'un peptide par un métallocène bifonctionnalisé de formule (I) selon l'une des revendications 6 ou 7, **caractérisé en ce qu'**il comprend la substitution d'un ou plusieurs synthons d'acides aminés par un ou plusieurs desdits métallocènes de formule (I) dans laquelle R représente un groupement protecteur des amines et R' représente un atome d'hydrogène, dans le cycle de synthèse dudit peptide.

17. Procédé selon la revendication 16, **caractérisé en ce que** la substitution est effectuée aux extrémités C-terminale ou N-terminale en remplacement des premiers ou derniers acides aminés, respectivement.

18. Procédé selon l'une quelconque des revendications 14 à 17, **caractérisé en ce qu'**au moins deux substitutions consécutives sont effectuées.

19. Oligonucléotides marqués **caractérisés en ce qu'**ils sont susceptibles d'être obtenus par le procédé de marquage selon l'une des revendications 14 ou 15.

20. Oligonucléotides marqués **caractérisés en ce qu'**au moins l'un des nucléosides le constituant est substitué par un bis(hydroxy)métallocène de formule générale (II) selon l'une des revendications 10 à 13.

21. Oligonucléotides marqués selon l'une des revendications 19 ou 20, **caractérisés en ce qu'**ils comportent au moins bis(hydroxy)métallocène de formule générale (II) en position 3'ou 5'.

22. Peptides marqués **caractérisés en ce qu'**ils sont susceptibles d'être obtenus par le procédé selon l'une quelconque des revendications 16 à 18.

23. Peptides marqués **caractérisés en ce que** au moins l'un des acides aminés les constituant est substitué par un métallocène bifonctionnalisé de formule (III) tel que défini dans la revendication 9.

24. Peptides selon l'une des revendications 22 ou 23, **caractérisés en ce qu'**ils comportent au moins un métallocène bifonctionnalisé de formule (III) aux extrémités C-terminale ou N-terminale.

25. Support de synthèse d'oligonucléotides, **caractérisé en ce que** au moins un métallocène de formule (I) selon l'une des revendications 1 à 7 est greffé sur ledit support par réaction covalente de l'une des ses extrémités fonctionnalisées.

## Patentansprüche

1. Bifunktionelles Metallocen der allgemeinen Formel (I), 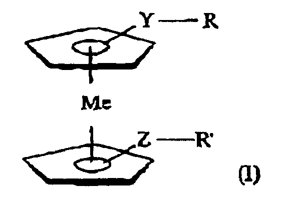
in der
- Me ein Übergangsmetall, vorzugsweise aus der Reihe Fe, Ru und Os, bedeutet,
- Y und Z identisch sind und aus der Reihe - (CH₂)ₙ-O-, -(CH₂)-O-[(CH₂)₂-O]ₚ- und -(CH₂)_{q-}CONH-(CH₂)ᵣ-O- stammen, oder
- Y-(CH₂)ₛ-NH und Z-(CH₂)ₜ-COO- bedeutet,
- n eine ganze Zahl zwischen 3 und 6 ist,
- p eine ganze Zahl zwischen 1 und 4 ist,
- q eine ganze Zahl zwischen 0 und 2 ist,
- r eine ganze Zahl zwischen 0 und 2 ist,
- s eine ganze Zahl zwischen 2 und 5 ist,
- t eine ganze Zahl zwischen 3 und 6 ist,
- R und R' wasserstoffatome bedeuten oder in der Oligonukleotid- und Peptidsynthese verwendete Schutzgruppen sind, wobei gilt, daß es sich bei mindestens einem Substituenten R oder R' um eine in der Oligonukleotid- und Peptidsynthese verwendete Schutzgruppe handelt und daß R und R' wie im folgenden definiert sind:
(i) stammen Z und Y aus der Reihe -(CH₂)ₙ-O-, -(CH₂)-O-[(CH₂)₂-O]ₚ- und -(CH₂)_{q}-CONH-(CH₂)ᵣ-O-, so handelt es sich bei R und R' um in der Oligonukleotidsynthese verwendete Schutzgruppen und R ist eine Gruppe, die nach der Entschützung eine freie Hydroxylgruppe, vorzugsweise eine lichturlbeständige Gruppe, Monomethoxytrityl, Dimethoxytrityl, tert.-Butyldimethylsilyl, Acetyl oder Trifluoracetyl, zurücklassen kann und R' ist eine phosphorhaltige Gruppe, die mit einer freien Hydroxylgruppe reagieren kann, vorzugsweise eine Phosphordiester-, Phosphoramidit- oder H-Phosphonatgruppe, und
(ii) bedeutet Y -(CH₂)ₛ-NH und Z-(CH₂)ₜ-COO-, so handelt es sich bei R um eine in der Peptidsynthese verwendete Schutzgruppe und R bedeutet eine Aminoschutzgruppe, vorzugsweise 9-Fluorenyloxycarbonyl, tert.-Butoxycarbonyl oder Benzyloxycarbonyl, und R' bedeutet ein wasserstoffatom.

2. Metallocen nach Anspruch 1, **dadurch gekennzeichnet, daß** es sich bei Me um Eisen handelt.

3. Metallocen nach Anspruch 1 oder 2, **dadurch gekennzeichnet, daß** Y und Z aus der Reihe -(CH₂)ₙ-O-, -(CH₂)-O-[(CH₂)₂-O]ₚ- und -(CH₂)_{q}-CONH-(CH₂)ᵣ-O- stammen.

4. Metallocen nach einem der Ansprüche 1 bis 3, **dadurch gekennzeichnet, daß** Y und Z jeweils -(CH₂)ₙ-O- bedeuten und n gleich 3 ist.

5. Metallocen nach einem der Ansprüche 1 bis 3, **dadurch gekennzeichnet, daß** Y und Z jeweils -(CH₂)-O-[(CH₂)₂-O]ₚ- bedeuten und p gleich 2 ist.

6. Metallocen nach Anspruch 1 oder 2, **dadurch gekennzeichnet, daß** Y-(CH₂)ₛ-NH- bedeutet und Z -(CH₂)ₜ-COO- bedeutet.

7. Metallocen nach Anspruch 6, **dadurch gekennzeichnet, daß** s gleich 3 ist und t gleich 4 ist.

8. Verfahren zur Herstellung eines Metallocens der Formel (I) nach einem der Ansprüche 3 bis 5, **dadurch gekennzeichnet, daß** es die folgenden Schritte umfaßt:
- einen Schritt, in dem man eine der Hydroxylgruppen eine Verbindung der allgemeinen Formel (II), 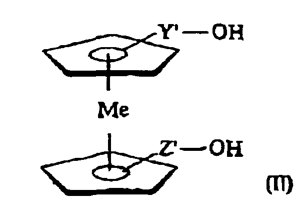
in der Me wie in den vorhergehenden Ansprüchen definiert ist,
Y' und Z' identisch sind und aus der Reihe -(CH₂)ₙ, -(CH₂)-O-[(CH₂)₂-O]_{p'}- -(CH₂)₂ und -(CH₂)_{q}-CONH-(CH₂)ᵣ stammen, n, q und r wie in den vorhergehenden Ansprüchen definiert sind und p' eine ganze Zahl zwischen 0 und 3 ist, **dadurch** schützt, daß man sie mit einer Gruppe, die nach der Entschützung eine freie Hydroxylgruppe zurücklassen kann, vorzugsweise eine lichtunbeständige Gruppe, Monomethoacytrityl, Dimethoxytrityl, tert.-Butyldimethylsilyl, Acetyl oder Trifluoracetyl versieht, sowie
- einen Schritt, bei dem man die andere frei bleibende Hydroxylgruppe mit einer phosphorhaltigen Gruppe, die mit einer freien Hydroxylgruppe reagieren kann, vorzugsweise aus der Reihe der Phosphordiester-, Phosphoramidit- und H-Phosphonatgruppen, kondensiert.

9. Verfahren zur Herstellung eines Metallocens der Formel (I) nach Anspruch 6 oder 7, **dadurch gekennzeichnet, daß** es die folgenden Schritte umfaßt:
- einen Schritt, in dem man die NH₂-Gruppe einer Verbindung der allgemeinen Formel (III), 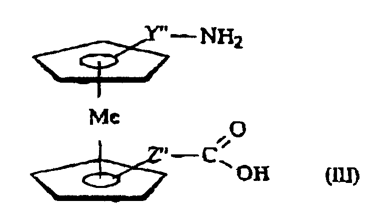
in der
- Me wie in den vorhergehenden Ansprüchen definiert ist,
- Y" -(CH₂)ₛ- bedeutet und
- z" -(CH₂)ₜ- bedeutet,
- s und t wie in den vorhergehenden Ansprüchen definiert sind, **dadurch** schützt, daß man sie mit einer Gruppe, die nach der Entschützung eine freie Aminofunktion hinterlassen kann, vorzugsweise aus der Reihe 9-Fluorenyloxycarbonyl, tert.-Butoxycarbonyl und Benzyloxycarbonyl, versieht.

10. Bis(hydroxy)metallocen der allgemeinen Formel (II), 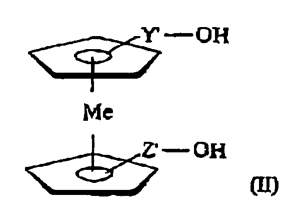
in der
- Me ein Übergangsmetall, vorzugsweise aus der Reihe Fe, Ru und Os, bedeutet,
- Y' und Z' identisch sind und aus der Reihe -(CH₂)ₙ-, -(CH₂)-O-[(CH₂)₂-O]ₚ,-(CH₂)₂- und -(CH₂)_{q}-CONH-(CH₂)ᵣ- stammen,
- n eine ganze Zahl zwischen 3 und 6 ist,
- p' eine ganze Zahl zwischen 0 und 3 ist,
- q eine ganze Zahl zwischen 0 und 2 ist und
- r eine ganze Zahl zwischen 0 und 2 ist, wobei gilt, daß wenn Me Fe oder Ru bedeutet und wenn Y' und Z' -(CH₂)ₙ- bedeuten, n 5 ist, und wenn Me Fe bedeutet und Y' und Z'
- (CH₂)-O-[(CH₂)₂-O]_{p'}-(CH₂)- bedeuten, und p' 0 ist.

11. Bis(hydroxy)metallocen nach Anspruch 10, **dadurch gekennzeichnet, daß** es sich bei Me um Eisen handelt.

12. Bis(hydroxy)metallocen nach Anspruch 10, **dadurch gekennzeichnet, daß** Y' und Z' jeweils -(CH₂)ₙ- bedeuten und n gleich 3 ist.

13. Bis(hydroxy)metallocen nach Anspruch 10 oder 11, **dadurch gekennzeichnet, daß** Y' und Z' jeweils -(CH₂)-O-[(CH₂)₂-O]_{p'}-(CH₂)₂- bedeuten und p' gleich 0 ist.

14. Verfahren zur Markierung eines Oligonukleotids mit einem bifunktionellen Metallocen der Formel (I) nach einem der Ansprüche 3 bis 5, **dadurch gekennzeichnet, daß** es die Substitution von einem oder mehreren Nukleotidsynthons durch eines oder mehrere der Metallocene der Formel (I), in der R und R' in der Oligonukleotidsynthese verwendete Schutzgruppen bedeuten, im synthesezyklus dieses Oligonukleotids umfaßt.

15. Verfahren nach Anspruch 14, **dadurch gekennzeichnet, daß** Substitution in 3'- oder 5'-Stellung **dadurch** durchgeführt wird, daß man das bzw. die erste(n) bzw. letzte(n) Nukleotid(e) ersetzt.

16. Verfahren zur Markierung eines Peptids mit einem bifunktionellen Metallocen der Formel (I) nach Anspruch 6 oder 7, **dadurch gekennzeichnet, daß** es die Substitution von einem oder mehreren Aminosäurensynthons durch eines oder mehrere der Metallocene der Formel (I), in der R eine Aminoschutzgruppe bedeutet und R' ein Wasserstoffatom bedeutet, im Synthesezyklus dieses Peptids umfaßt.

17. verfahren nach Anspruch 16, **dadurch gekennzeichnet, daß** die Substitution an den C-terminalen oder N-terminalen Enden durch Ersetzen der ersten bzw. letzten Aminosäuren durchgeführt wird.

18. Verfahren nach einem der Ansprüche 14 bis 17, **dadurch gekennzeichnet, daß** mindestens zwei aufeinanderfolgende Substitutionen durchgeführt werden.

19. Markierte Oligonukleotide, **dadurch gekennzeichnet, daß** sie nach den Markierungsverfahren nach Anspruch 14 oder 15 erhältlich sind.

20. Markierte oligonukleotide, **dadurch gekennzeichnet, daß** mindestens eines der Nukleoside, aus denen es besteht, durch ein Bis(hydroxy)metallocen der allgemeinen Formel (II) nach einem der Ansprüche 10 bis 13 substituiert ist.

21. Markierte oligonukleotide nach Anspruch 19 oder 20, **dadurch gekennzeichnet, daß** sie mindestens ein Bis(hydroxy)metallacen der allgemeinen Formel (II) in 3'- oder 5'-Stellung umfassen.

22. Markierte Peptide, **dadurch gekennzeichnet, daß** sie nach den Verfahren nach einem der Ansprüche 16 bis 18 erhältlich sind.

23. Markierte Peptide, **dadurch gekennzeichnet, daß** mindestens eine der Aminosäuren, aus denen sie bestehen, durch ein bifunktionelles Metallocen der Formel (III) wie in Anspruch 9 definiert substituiert ist.

24. Peptide nach Anspruch 22 oder 23, **dadurch gekennzeichnet, daß** sie am C-terminalen Ende oder am N-terminalen Ende mindestens ein bifunktionelles Metallocen der Formel (III) umfassen.

25. Träger für die Oligonukleotidsynthese, **dadurch gekennzeichnet, daß** mindestens ein Metallocen der Formel (I) nach einem der Ansprüche 1 bis 7 durch kovalente Reaktion von einem seiner funktionellen Enden an diesem Träger aufgepfropft ist.

## Claims

1. Bifunctionalized metallocene of general formula (I) : 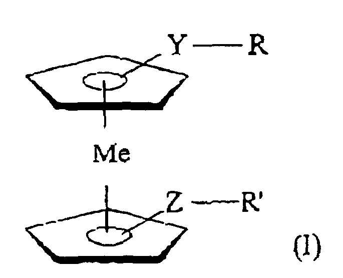
in which
- Me represents a transition metal, preferably chosen from Fe, Ru and Os,
- Y and Z, which are identical, are chosen from
- (CH₂)ₙ-O-, -(CH₂)-O-[(CH₂)₂-O]ₚ- and -(CH₂)_{q}-CONH-(CH₂)ᵣ-O-, or else
- Y is -(CH₂)ₛ-NH- and Z is -(CH₂)ₜ-COO-,
- n is an integer between 3 and 6,
- p is an integer between 1 and 4,
- q is an integer between 0 and 2,
- r is an integer between 0 and 2,
- s is an integer between 2 and 5,
- t is an integer between 3 and 6,
- R and R' represent hydrogen atoms or are protective groups used in the synthesis of oligonucleotides and peptides, it being understood that at least one of R or R' is a protective group used in the synthesis of oligonucleotides and peptides and that R and R' are as defined below:
(i) when Z and Y are chosen from -(CH₂)ₙ-O-, -(CH₂)-O-[(CH₂)₂-O]ₚ- and (CH₂)_{q}-CONH-(CH₂)ᵣ-O-, then R and R' are protective groups used in the synthesis of oligonucleotides, and R is a group capable of leaving a free hydroxyl group after deprotection, preferably a photolabile group, monomethoxytrityl, dimethoxytrityl, tertbutyldimethylsilyl, acetyl or trifluoroacetyl, and R' is a phosphorus group capable of reacting with a free hydroxyl group, preferably a phosphodiester, phosphoramidite or H-phosphonate group, and
(ii) when Y is -(CH₂)ₛ-NH- and Z is -(CH₂)ₜ-COO-, then R is a protective group used in the synthesis of peptides and represents a protective group for amines, preferably 9-fluorenyloxycarbonyl, tert-butoxycarbonyl or benzyloxycarbonyl, and R' represents a hydrogen atom.

2. Metallocene according to Claim 1, **characterized in that** Me is iron.

3. Metallocene according to either of Claims 1 and 2, **characterized in that** Y and Z are chosen from -(CH₂)ₙ-O-, -(CH₂-O-[(CH₂)₂-O]ₚ- and -(CH₂)_{q}-CONH-(CH₂)ᵣ-O-.

4. Metallocene according to one of Claims 1 to 3, **characterized in that** Y and Z are each -(CH₂)ₙ-O-, n being equal to 3.

5. Metallocene according to one of Claims 1 to 3, **characterized in that** Y and Z are each -(CH₂)-O-[(CH₂)₂-O]ₚ-, p being equal to 2.

6. Metallocene according to either of claims 1 and 2, **characterized in that** Y is -(CH₂)ₛ-NH-, Z is -(CH₂)ₜ-COO-.

7. Metallocene according to Claim 6, **characterized in that** s is equal to 3 and t is equal to 4.

8. Process for the preparation of a metallocene of formula (I) according to any one of Claims 3 to 5, **characterized in that** it comprises the following stages:
- a stage of protection of one of the hydroxyl groups of a compound of general formula (II): 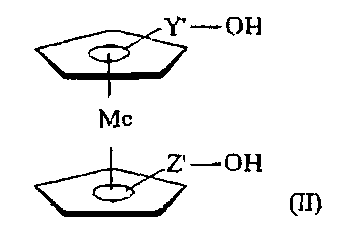
in which Me is as defined in the preceding claims, Y' and Z', which are identical, are chosen from -(CH₂)ₙ-, -(CH₂)-O-[(CH₂)₂-O]ₚ,-(CH₂)₂- and -(CH₂)_{q-}CONH-(CH₂)ᵣ-, n, q and r are as defined in the preceding claims and p' is an integer between 0 and 3,
by attachment of a group capable of leaving a free hydroxyl group after deprotection, preferably chosen from a photolabile group, monomethoxytrityl, dimethoxytrityl, tertbutyldimethylsilyl, acetyl and trifluoroacetyl, and
- a stage of coupling, to the other hydroxyl group left free, a phosphorus group capable of reacting with a free hydroxyl group, preferably chosen from the phosphodiester, phosphoramidite and H-phoaphonate groups.

9. Process for the preparation of a metallocene of formula (I) according to either of Claims 6 and 7, **characterized in that** it comprises the following stages:
- a stage of protection of the NH₂ group of a compound of general formula (III): 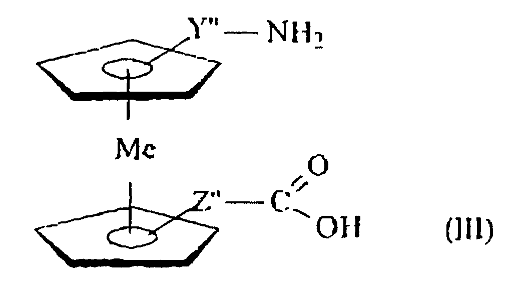
in which
- Me is as defined in the preceding claims,
- Y" is -(CH₂)ₛ- and
- Z" is -(CH₂)ₜ-,
- s and t being as defined in the preceding claims,
by attachment of a group capable of leaving a free amine functional group after deprotection, preferably chosen from 9-fluorenyloxycarbonyl, tert-butoxycarbonyl and benzyloxycarbonyl.

10. Bis(hydroxy)metallocene of general formula (II): 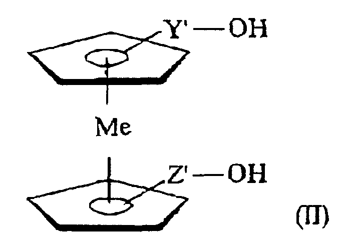
in which
- Me is a transition metal, preferably chosen from Fe, Ru and Os,
- Y' and Z', which are identical, are chosen from -(CH₂)ₙ-, -(CH₂)-O-[(CH₂)₂-O]_{p'}-(CH₂)₂- and -(CH₂)_{q-}CONH-(CH₂)ᵣ-,
- n is an integer between 3 and 6,
- p' is an integer between 0 and 3,
- q is an integer between 0 and 2, and
- r is an integer between 0 and 2,
it being understood that, when Me is Fe or Ru and when Y' and Z' are -(CH₂)ₙ-, then n is 5 and, when Me is Fe and when Y' and Z' are -(CH₂)-O-[(CH₂)₂₋O]_{p'}-(CH₂)-, then p' is 0.

11. Bis(hydroxy)metallocene according to Claim 10, **characterized in that** Me is iron.

12. Bis(hydroxy)metallocene according to Claim 10, **characterized in that** Y' and Z' are each -(CH₂)ₙ-, n being equal to 3.

13. Bis(hydroxy)metallocene according to either of Claims 10 and 11, **characterized in that** Y' and Z' are each -(CH₂)-O-[(CH₂)₂-O]_{p'}-(CH₂)₂-, p' being equal to 0.

14. Process for labelling an oligonucleotide with a bifunctionalized metallocene of formula (I) according to any one of Claims 3 to 5, **characterized in that** it comprises the substitution of one or more nucleotide synthons by one or more of said metallocenes of formula (I), in which R and R' are protective groups used in the synthesis of oligonucleotides, in the cycle for the synthesis of said oligonucleotide.

15. Process according to Claim 14, **characterized in that** the substitution is carried out in the 3'- or 5'-positions in replacement of the first or last nucleotides, respectively.

16. Process for labelling a peptide by a bifunctionalized metallocene of formula (I) according to either of Claims 6 and 7, **characterized in that** it comprises the substitution of one or more amino acid synthons by one or more of said metallocenes of formula (I), in which R represents a protective group for amines and R' represents a hydrogen atom, in the cycle for the synthesis of said peptide.

17. Process according to Claim 16, **characterized in that** the substitution is carried out at the C-terminal or N-terminal ends in replacement of the first or last amino acids, respectively.

18. Process according to any one of Claims 14 to 17, **characterized in that** at least two consecutive substitutions are carried out.

19. Labelled oligonucleotides, **characterized in that** they are capable of being obtained by the labelling process according to either of Claims 14 and 15.

20. Labelled oligonucleotides, **characterized in that** at least one of the nucleosides constituting them is substituted by a bis(hydroxy)metallocene of general formula (II) according to one of Claims 10 to 13.

21. Labelled oligonucleotides according to either of Claims 19 and 20, **characterized in that** they comprise at least one bis(hydroxy)metallocene of general formula (I) in the 3'- or 5'-position.

22. Labelled peptides, **characterized in that** they arc capable of being obtained by the process according to any one of Claims 16 to 18.

23. Labelled peptides, **characterized in that** at least one of the amino acids constituting them is substituted by a bifunctionalized metallocene of formula (III) as defined in Claim 9.

24. Peptides according to either of Claims 22 and 23, **characterized in that** they comprise at least one bifunctionalized metallocene of formula (III) at the C-terminal or N-terminal ends.

25. Support for the synthesis of oligonucleotides, **characterized in that** at least one metallocene of formula (I) according to one of Claims 1 to 7 is grafted to said support by covalent reaction of one of its functionalized ends.
